# EUROPÄISCHE PATENTSCHRIFT

(11) **EP 4 254 234 B1**
(45) Veröffentlichungstag und Bekanntmachung des Hinweises auf die Patenterteilung: **27.11.2024**
(21) Anmeldenummer: 23163813.1
(22) Anmeldetag: 23.03.2023
(51) Int. Cl.: G06F 21/44, G06F 21/33, H04L 9/40

(54) **AUSSTELLEN EINES DIGITALEN CREDENTIALS FÜR EINE ENTITÄT**
DIGITAL CREDENTIAL ISSUING FOR AN ENTITY
DÉLIVRANCE D'UN CREDIAL NUMÉRIQUE POUR UNE ENTITÉ

(30) Priorität: 31.03.2022 DE 102022107718
(43) Veröffentlichungstag der Anmeldung: 04.10.2023
(73) Patentinhaber: Bundesdruckerei GmbH, 10969 Berlin (DE)
(72) Erfinder: BASTIAN, Paul, 10243 Berlin (DE); KRAUS, Micha, 10827 Berlin (DE); MUSICK, Robert, 16515 Oranienburg (DE); FISCHER, Jörg, 10317 Berlin (DE); SEEGEBARTH, Christian, 20249 Hamburg (DE); ENTSCHEW, Enrico, 10405 Berlin (DE); WALZ, Marco, 71229 Leonberg (DE)
(74) Vertreter: Richardt Patentanwälte PartG mbB

(56) Entgegenhaltungen:
- US-A1- 2020 274 713
- US-A1- 2021 365 544
- ANONYMOUS: "Wikipedia - Decentralized identifier", 24 February 2022 (2022-02-24), XP093065725, Retrieved from the Internet <URL:https://en.wikipedia.org/w/index.php?title=Decentralized_identifier&oldid=1073741717> [retrieved on 20230720]
- ANONYMOUS: "Certificate signing request - Wikipedia", 12 March 2022 (2022-03-12), XP093065734, Retrieved from the Internet <URL:https://en.wikipedia.org/w/index.php?title=Certificate_signing_request&oldid=1076696718> [retrieved on 20230720]

## Beschreibung

Die Erfindung betrifft ein Verfahren zum Ausstellen eines digitalen Credentials für eine Entität durch ein Ausstellercomputersystem, ein Ausstellercomputersystem zum Ausstellen des digitalen Credentials sowie ein System, welches das Ausstellercomputersystem sowie ein anfragendes Computersystem umfasst.

In einer zunehmend vernetzten Welt erlangen sichere digitale Identitäten sowie verifizierbare und damit vertrauenswürdige digitale Nachweise entsprechender Identitäten immer mehr an Bedeutung. Digitale Identitäten sind beispielsweise eine Voraussetzung zum effektiven Gestalten von digitalen Geschäftsprozessen, digitalen Arbeitsabläufen und technischen Systemen. Zugleich stellen digitale Identitäten ein sicherheitsrelevantes und daher schutzbedürftiges Gut dar.

Insbesondere im Falle von Entitäten, wie etwa juristischen Personen, bei welchen es sich nicht um natürliche Personen handelt, stellt ein sicheres Ausstellen von digitalen Identitäten eine technische Herausforderung dar. Dies gilt insbesondere, da die entsprechenden Entitäten nicht selbst handlungsfähig sind, sondern im Zuge des Ausstellens Vertreter für die Entität tätig werden müssen.

US 2021/365544 A1 offenbart eine identity integration platform welche elektronische credentials für Nutzer mit einem decentralized identifier ausstellt, basierend auf der Paradigma der selbstbestimmten Identität (self-sovereign identity). Die Nutzer sind dabei aber natürliche Personen.

US 2020/274713 A1 beschreibt ebenfalls das Konzept von selbstbestimmter Identität (self-sovereign identity) und offenbart ebenfalls einen decentralized identifer. Dabei offenbart wird in [0024] auch kurz erwänht, dass ein credential owner mit einem decentralized identifier (DID) nicht nur eine natürliche Person, sondern auch eine rechtliche Person, eine Organisation, eine Firma, oder eine Regierung sein kann. Allerdings wird hierbei kein Verfahren für die Ausstellung von credentials für solche nicht-natürlichen Entitäten offenbart.

Der Erfindung liegt daher die Aufgabe zugrunde, ein sicheres Verfahren zum Ausstellen eines digitalen Credentials für eine Entität bereitzustellen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Ausstellen eines digitalen Credentials für eine Entität durch ein Ausstellercomputersystem. Das Verfahren umfasst:
- Empfangen einer Ausstellanfrage zum Ausstellen des digitalen Credentials über ein Netzwerk von einem anfragenden Computersystem, wobei die Ausstellanfrage eine der anfragenden Entität zugeordnete Domain, eine E-Mail-Adresse eines offiziellen Vertreters der Entität und einen Decentralized Identifier umfasst,
- Senden einer Registerabfrage nach einem Registereintrag als Existenznachweis der Entität über das Netzwerk an ein Registercomputersystem,
- In Antwort auf das Senden der Registerabfrage, Empfangen eines digitalen Registerauszugs der Entität als Existenznachweis über das Netzwerk von dem Registercomputersystem,
- Prüfen einer Verknüpfung zwischen der Domain und dem Decentralized Identifier,
- Senden einer E-Mail mit einer Einladung zum Aufbau eines verschlüsselten Kommunikationskanals an die E-Mail-Adresse,
- in Antwort auf das Senden der E-Mail, Aufbau eines verschlüsselten Kommunikationskanals zwischen dem Ausstellercomputersystem und einer ID-Wallet des offiziellen Vertreters der Entität über das Netzwerk,
- Senden einer Anfrage nach einem digitalen ID-Credential des offiziellen Vertreters der Entität mit personenbezogenen Attributen des Vertreters über den verschlüsselten Kommunikationskanal,
- In Antwort auf das Senden der Anfrage, Empfangen des digitalen ID-Credential über den verschlüsselten Kommunikationskanal,
- Verifizieren der Authentizität des digitalen ID-Credentials,
- Prüfen der Vertretungsberechtigung des offiziellen Vertreters der Entität unter Verwendung der personenbezogenen Attribute des digitalen ID-Credential und des digitalen Registerauszugs der Entität,
- auf eine erfolgreiche Prüfung der Vertretungsberechtigung hin, Ausstellen des digitalen Credentials mit entitätsbezogenen Attributen unter Verwendung des digitalen Registerauszugs,
- Senden des digitalen Credentials in Antwort auf die empfangen Ausstellanfrage über das Netzwerk an das anfragende Computersystem.

Ausführungsformen können den Vorteil haben, dass auch für Entitäten, bei welchen es sich um keine natürlichen Personen, sondern vielmehr juristische Personen handelt, in sicherer und vollautomatisierter Weise digitale Credentials mit entitätsbezogenen Attributen ausgestellt werden können.

Das Verfahren zum Ausstellen des digitalen Credentials für eine Entität wird beispielsweise durch den Empfang der entsprechenden Ausstellanfrage initiiert. Beispielsweise handelt es sich bei der entsprechenden Ausstellanfrage um ein digitales Antragsformular, etwa ein Onlineformular, welches von einem Vertreter einer zu verifizierenden Entität ausgefüllt und an das Ausstellercomputersystem gesendet wird. Ein entsprechendes Onlineformular kann beispielsweise unter Verwendung eines Browserprogramms von dem anfragenden Computersystem über das Internet aufgerufen, ausgefüllt und an das Austellercomputersystem gesendet werden. Beispielsweise füllt ein Systemadministrator der zu verifizierenden Entität als Vertreter das Antragsformular aus. Bei dem hierfür verwendeten Computersystem handelt es sich beispielsweise um ein Computersystem der Entität.

Zum Verifizieren der Entität umfasst die Ausstellanfrage eine der anfragenden Entität zugeordnete Domain. Bei einer solche Domain handelt es sich um einen allgemein nach Außen sichtbaren digitalen Auftritt der Entität im Internet. Hierbei handelt es sich um einen zusammenhängenden Teilbereich des hierarchischen Domain Name System (DNS), beispielsweise um eine der Entität zugeordnete Second-Level- oder Third-Level-Domain sowie ggf. zugehörige Subdomains. Die Ausstellanfrage umfasst ferner eine E-Mail-Adresse eines offiziellen Vertreters der Entität. Bei einem offiziellen Vertreter der Entität handelt es sich um eine natürliche Person, welche der Entität als handlungsbevollmächtigter Vertreter offiziell zugeordnet ist. Eine entsprechende Zuordnung ist in einem Register, wie etwa einem Handelsregister, eingetragen. Beispielsweise handelt es sich bei einem entsprechenden offiziellen Vertreter der Entität um ein geschäftsführendes Vorstandsmitglied, etwa einen Geschäftsführer, einen Vorstandsvorsitzenden oder Generaldirektor, etwa einen Vorsitzenden oder Präsident der Geschäftsleitung der Entität, einen allein zeichnungsberechtigten Geschäftsführer, Chief Executive Officer (CEO) oder einen Prokuristen.

Ein entsprechender Registereintrag der Entität kann beispielsweise ferner entitätsbezogene Attribute umfassen. Bei diesen entitätsbezogenen Attributen handelt es sich beispielsweise um ein oder mehrere der folgenden Attribute: einen Namen unter welchem die Entität firmiert, eine Anschrift der Entität, eine Angabe der Rechtsform der Entität, eine Register-ID der Entität, Angaben zu Namen, Ort des Registers und/oder einem für das Register zuständigen Gericht, ein Gründungsdatum der Entität.

Beispielsweise umfassen die in das digitale Credential aufgenommenen entitätsbezogenen Attribute von einem digitalen Registerauszug eines Registereintrags der Entität bereitgestellte entitätsbezogene Attribute der entsprechenden Entität. Diese entitätsbezogenen Attribute umfassen beispielsweise ein oder mehrere der folgenden Attribute: einen Namen unter welchem die Entität firmiert, eine Anschrift der Entität, eine Angabe der Rechtsform der Entität, eine Register-ID der Entität, Angaben zu Namen, Ort des Registers und/oder einem für das Register zuständigen Gericht, ein Gründungsdatum der Entität. Beispielsweise umfassen die in das digitale Credential aufgenommenen entitätsbezogenen Attribute weitere entitätsbezogene Attribute, wie etwa die Domain der Entität.

Beispielsweise kann die Ausstellanfrage ferner die Register-ID der Entität umfassen. Anhand der Register-ID kann das Ausstellcomputersystem beispielsweise einen Eintrag der Entität in dem Register identifizieren. Alternativerweise kann das Ausstellcomputersystem die Registerabfrage unter Verwendung des Namens der Entität ausführen um zu prüfen, ob eine Entität mit dem entsprechenden Namen in dem Register eingetragen ist. Ferner kann anhand des Namens beispielsweise ein zugehöriger Eintrag der Entität in dem Register identifiziert werden.

Ferner umfasst die Ausstellanfrage einen Decentralized Identifier (DID), d.h. einen dezentralen Identifikator, der Entität. Bei dem Decentralized Identifier handelt es sich um einen Identifikator gemäß Spezifikation der W3C (s. https://www.w3.org/TR/did-core/). Dieser Standard betrifft die Identifizierung eines DID-Subjekts ("DID subject"), etwa einer Entität wie einem Unternehmen, ohne von zentralen Diensten abhängig zu sein. Ein DID ist ein Identifikator, der eine überprüfbare, dezentrale digitale Identität bereitstellt. DIDs basieren auf dem Paradigma der selbstbestimmten Identität (Self-Sovereign Identity/SSI). Ein DID ist dazu konfiguriert, dass sie es einem DID-Controller ermöglicht, die Kontrolle über die DID nachzuweisen, wird beispielsweise unabhängig von einem zentralen Register, Identitätsanbieter oder einer Zertifizierungsstelle implementiert. DIDs sind URls, die ein DID-Subjekt mit einem DID-Dokument verknüpfen, welches vertrauenswürdige Interaktionen ermöglicht, die diesem Subjekt zugeordnet sind. Jedes DID-Dokument kann kryptographisches Material, Verifizierungsverfahren und/oder Dienstendpunkte ("service endpoints") angaben, die eine Reihe von Mechanismen bereitstellen, die es dem DID-Controller ermöglichen, die Kontrolle über die DID nachzuweisen. Dienstendpunkte ermöglichen vertrauenswürdige Interaktionen, die dem DID-Subjekt zugeordnet sind. Ein DID-Dokument umfasst beispielsweis ein oder mehrere der folgenden Angaben: die zugehörige DID, etwa zur Selbstbeschreibungszwecken, ein oder mehrere öffentliche kryptographischen Schlüssel, etwa zur Verifikationszwecken, Angaben zu ein oder mehreren Authentifizierungsverfahren, etwa zu Authentifizierungszwecken, ein oder mehrere Dienstendpunkte, etwa zu Interaktionszwecken, einen Zeitstempel und/oder eine digitale Signatur.

Eine selbstbestimmte Identität ermöglicht es einer Person, Organisation oder Maschine eine digitale Identität zu erzeugen und zu kontrollieren, ohne dass es der Erlaubnis eines Vermittlers oder einer zentralen Partei bedarf. Zudem ermöglicht sie die Kontrolle darüber, wie individuelle Daten geteilt und/oder verwendet werden. Ein Nutzer einer selbstbestimmten Identität hat beispielsweise unter Verwendung einer ID-Wallet die Möglichkeit, Decentralized Identifier (Dezentrale Identifikatoren/DIDs) zu generieren sowie zum Speichern von verifizierbaren Identitätsdaten (verifiable Credentials).

Anhand der Angaben der Ausstellanfrage kann das Ausstellcomputersystem verifizieren, ob die Entität, für welche das digitale Credential angefragt wird, existiert. Ferner kann das Ausstellercomputersystem verifizieren, ob der angegebene Decentralized Identifier der Domain der Entität zugeordnet ist, d.h. ob es sich bei dem angegebenen Decentralized Identifier tatsächlich um einen DID der Entität handelt. Somit kann das Ausstellercomputersystem sichergehen, dass bei einem Aufbau eines verschlüsselten Kommunikationskanals mit der Entität unter Verwendung der DID, etwa einem DIDComm-Kanal, der entsprechende Kommunikationskanal tatsächlich mit der Entität, deren Domain in der Ausstellanfrage angegeben ist, aufgebaut wird. Dieser verschlüsselte Kommunikationskanal zwischen Ausstellercomputersystem und Entität kann beispielsweise zum Ausführen eines Challenge-Response-Verfahrens zwischen Ausstellercomputersystem und Entität verwendet werden, um zu prüfen, ob das anfragende Computersystem tatsächliche Kontrolle über die in der Ausstellanfrage angegebene Domain besitzt. Somit kann sichergestellt werden, dass es sich bei dem anfragenden Computersystem tatsächlich um ein Computersystem der Entität handelt, deren Domain angegeben wurde. Schließlich kann die E-Mail-Adresse des offiziellen Vertreters zum Aufbau einer verschlüsselten Kommunikationsverbindung mit einem Computersystem des entsprechenden Vertreters bzw. einer ID-Wallet auf einem entsprechenden Computersystem verwendet werden. Unter Verwendung von personenbezogenen Attributen aus der ID-Wallet kann sich der offizielle Vertreter gegenüber dem Ausstellercomputersystem authentisieren. Anhand der personenbezogenen Attribute kann das Ausstellercomputersystem den offiziellen Vertreter der Entität unter Verwendung der Registerauszugs authentifizieren. Durch die erfolgreiche Authentisierung zeigt der offizielle Vertreter der Entität beispielsweise seien Zustimmung zu dem Ausstellen des digitalen Credentials an.

Zum Prüfen der Existenz der Entität, für welche das digitale Credential angefragt wird, sendet das Ausstellercomputersystem einer Registerabfrage nach einem Registereintrag als Existenznachweis der Entität über das Netzwerk an ein Registercomputersystem. Beispielsweise baut das Ausstellercomputersystem hierzu über das Netzwerk einen verschlüsselten Kommunikationskanal mit einem Registercomputersystem des entsprechenden Registers auf. Die Registerabfrage wird beispielsweise über diesen verschlüsselten Kommunikationskanal gesendet. In Antwort auf das Senden der Registerabfrage, empfängt das Ausstellercomputersystem einen digitalen Registerauszugs der Entität als Existenznachweis. Der Registerauszug wird beispielsweise über den verschlüsselten Kommunikationskanal von dem Registercomputersystem empfangen. Durch einen gültigen digitalen Registerauszug der Entität, etwa einen digitalen Handelsregisterauszug, kann deren Existenz digital geprüft werden.

Ferner wird eine Verknüpfung zwischen der angegebenen Domain und dem abgegeben Decentralized Identifier geprüft. Durch eine solche Prüfung kann sichergestellt werden, dass es sich bei dem angegebenen Decentralized Identifier tatsächlich um einen Decentralized Identifier derjenigen Entität handelt, deren Domain in der Ausstellanfrage angegeben wurde.

Beispielsweise stellt die Entität unter Verwendung der Well Known DID Configuration (s. https://identity.foundation/.well-known/resources/did-configuration/) einen Nachweis bereit, über den die Verknüpfung der angegebenen DID mit der in der Ausstellanfrage übermittelten Domain geprüft werden kann. Die Prüfung erfolgt durch das Ausstellecomputersystem beispielsweise automatisch. Ist die Prüfung erfolgreich, wird beispielsweise einem SSI-Agent der Entität eine Einladung des Ausstellercomputersystems zum Aufbau einer verschlüsselten Kommunikationskanals, beispielsweise eines DIDComm-Kanals, zugesendet. Diese Einladung wird seitens der Entität akzeptiert. Beispielsweise erhält der Systemadministrator der Entität über eine Verwaltungsnutzerschnittstelle (Management User Interface/Management UI) des SSI-Agents der Entität eine Benachrichtigung über die Einladung des Ausstellercomputersystems zum Aufbau des verschlüsselten Kommunikationskanals. Diese Einladung bzw. Verbindungsanfrage kann dann beispielsweise von dem Systemadministrator der Entität akzeptiert werden, damit der verschlüsselte Verbindungkanal aufgebaut wird.

Ferner kann von dem Ausstellercomputersystem beispielsweise eine Kontrolle des angegeben Decentralized Identifier über die angegebene Domain geprüft werden. Nach einem erfolgreichen Aufbau des verschlüsselten Kommunikationskanals zwischen dem Ausstellercomputersystem und dem anfragenden Computersystem unter Verwendung des Decentralized Identifier kann das Ausstellercomputersystem beispielsweise über ein separates Verfahren prüfen, ob der Antragsteller die übermittelte Domain kontrolliert.

Anschließend sendet das Ausstellercomputersystem die E-Mail mit der Einladung zum Aufbau eines verschlüsselten Kommunikationskanals an die E-Mail-Adresse des offiziellen Vertreters der Entität, welche in der Ausstellanfrage an das Ausstellercomputersystem übermittelt wurde. In Antwort auf das Senden der E-Mail, wird der verschlüsselte Kommunikationskanal zwischen dem Ausstellercomputersystem und einer ID-Wallet des offiziellen Vertreters der Entität über das Netzwerk aufgebaut. Beispielsweise handelt es sich bei dem verschlüsselte Kommunikationskanal um einen DIDComm-Kanal. Das Ausstellercomputersystem sendet die Einladung beispielsweise in Form eines maschinenlesbaren optischen Codes, etwa eines QR-Codes, an die entsprechende E-Mail-Adresse. Der Empfänger der E-Mail, d.h. der offizielle Vertreter der Entität, scannt beispielsweise den maschinenlesbaren optischen Code unter Verwendung seiner ID-Wallet, etwa einer SSI-Wallet, und baut dadurch den verschlüsselten Kommunikationskanal auf. Die ID-Wallet des offiziellen Vertreters der Entität wird beispielsweise auf einem Computersystem des entsprechenden Vertreters bereitgestellt. Beispielsweise wird der verschlüsselte Kommunikationskanal zu einem SSI-Agent des Ausstellercomputersystems aufgebaut.

Über den verschlüsselten Kommunikationskanal sendet das Ausstellercomputersystem eine Anfrage nach einem digitalen ID-Credential an den offiziellen Vertreter der Entität. Das digitale ID-Credential umfasst personenbezogene Attribute des Vertreters anhand derer der Vertreter durch das Ausstellercomputersystem authentifiziert werden kann. In Antwort auf das Senden der Anfrage, empfängt das Ausstellercomputersystem das digitale ID-Credential des offiziellen Vertreters der Entität. Die Authentizität des empfangenen digitalen ID-Credentials wird durch das Ausstellercomputersystem verifiziert. Beispielsweise ist das digitale ID-Credential bzw. sind die von dem digitalen ID-Credential umfassten personenbezogene Attribute signiert. Beispielsweise prüft das Ausstellercomputersystem zum Verifizieren der Authentizität die entsprechende Signatur mit einem Signaturprüfschlüssel. Die personenbezogenen Attribute des verifizierten digitalen ID-Credential werden dann zur Authentifizierung des offiziellen Vertreters der Entität durch das Ausstellercomputersystem beispielsweise auf eine Übereinstimmung mit personengebogenen Attributen von offiziellen Vertretern der Entität geprüft, welche gemäß digitalem Registerauszug in dem Registereintrag der Entität eingetragen sind. Auf eine Übereinstimmung der personenbezogenen Attribute des verifizierten digitalen ID-Credential mit personenbezogenen Attributen eines in dem digitalen Registerauszug angeführten offiziellen Vertreter der Entität gilt der offizielle Vertreter, dessen E-Mail-Adresse in der Ausstellanfrage angegeben wurde, als erfolgreich authentifiziert und als für die Entität tatsächlich vertretungsberechtigt.

Beispielsweise fordert das Ausstellercomputersystem, auf den erfolgreichen Aufbau des verschlüsselten Kommunikationskanals hin, den offiziellen Vertreter der Entität zu einem Identitätsnachweis in Form des ID-Credentials auf. Beispielsweise verwendet der offiziellen Vertreter zum Bereitstellen des ID-Credentials eine digitale Basis ID, d.h. ein digitales Basis ID-Credential, oder der offiziellen Vertreter sendet das digitale Basis ID-Credential als ID-Credential an das Ausstellercomputersystem. Beispielsweise erhält der offizielle Vertreter die Anfrage nach dem digitalen ID-Credential in seinem ID-Wallet und bestätigt diese. Das digitale ID-Credential mit den angeforderten personenbezogenen Attributen wird dann, beispielsweise mit einem Nachweis der Authentizität des digitalen ID-Credential und/oder einer zum Bereitstellen des digitale ID-Credential verwendete digitale Basis ID, an das Ausstellercomputersystem übermittelt. Beispielsweise erfolgt die Übermittlung an den SSI-Agenten des Ausstellercomputersystem. Das Ausstellercomputersystem überprüft den Nachweis der Authentizität und führt einen Abgleich der übermittelten personenbezogenen Attribute mit dem digitalen Registerauszug, beispielsweise einem digitalen Handelsregisterauszug, durch. Die Überprüfung ist beispielsweise erfolgreich, wenn die personenbezogenen Attribute in einer von dem digitalen Registerauszug umfassten Liste der für die Entität vertretungsberechtigten Personen wiederzufinden sind. Beispielsweise kann der Identitätsnachweis in Form eines ID-Credentials auf der eID-Funktion des elektronischen Personalausweises in Form der Online-Ausweisfunktion beruhen.

Auf die erfolgreiche Prüfung der Vertretungsberechtigung hin, stellt das Ausstellercomputersystem das angefragte digitale Credential mit entitätsbezogenen Attributen unter Verwendung des digitalen Registerauszugs aus. Beispielsweise werden die entitätsbezogenen Attribute aus dem digitalen Registerauszug entnommen. Das resultierende digitale Credential wird von dem Ausstellercomputersystem in Antwort auf die empfangen Ausstellanfrage über das Netzwerk an das anfragende Computersystem gesendet. Das ausgestellte digitale Credential dient beispielsweise als Initial Trust Credential der Entität. Das ausgestellte Credential wird beispielsweise von dem SSI-Agent der Entität gespeichert, in dem ebenfalls eine ID-Wallet enthalten sein kann.

Beispielsweise stellt das Ausstellercomputersystem der Entität das digitale Credential nach einer erfolgreichen Überprüfung der Identität des offiziellen Veteres der Entität aus, dessen E-Mail-Adresse in der Ausstellanfrage angegeben wurde. Beispielsweise sendet das Ausstellercomputersystem nach erfolgreichem Abschluss der Überprüfungen ein Angebot zum Ausstellen des digitalen Credentials an das anfragende Computersystem. Beispielsweise muss das anfragende Computersystem, z.B. ein das anfragende Computersystem nutzender Systemadministrator der Entität, als Voraussetzung für das Ausstellen des digitalen Credentials das Angebot akzeptieren. Das resultierende digitale Credential der Entität wird beispielsweise von dem SSI-Agent der Entität gespeichert und kann dazu verwendet werden, beispielsweise in einem SSI-Kontext gegenüber Dritten die Identität der Entität nachzuweisen. Ein solcher Nachweis kann von der Entität bzw. einem Computersystem der Entität beispielsweise sowohl im B2C-, als auch im B2B-Kontext verwendet werden.

Ausführungsformen können den Vorteil haben, dass sie durch das Ausstellen von digitalen Credential für Entitäten zu einer Schaffung von initialem Vertrauen in Ökosystemen zwischen Entitäten, etwa Unternehmen, sowie zwischen Entitäten und natürlichen Personen, etwa Unternehmen und Kunden, beitragen, wodurch ein Fundament für ein Zusammenarbeit zwischen Entitäten sowie zwischen Entitäten und natürlichen Personen im digitalen Raum bereitgestellt werden kann.

Ausführungsformen können den Vorteil habe, dass für eine Validierung der Entität, etwa einer eine Organisations- oder Firmenvalidierung, bestimmte Kriterien erfüllt werden, wie etwa ein Erbringen eines Nachweises der Existenz der Entität, eine Überprüfung des Antragsstellers des Ausstellungsanfrage und gegebenenfalls eine Überprüfung der in das digitale Credential aufgenommenen entitätsbezogenen Attribute. Ausführungsformen können den Vorteil habe, dass durch das Ausstellercomputersystem ein vollständig automatisierter Prozess zur Validierung der Entität und zum Ausstellen des digitalen Credentials der Entität bereitgestellt werden kann. Dabei umfasst der Prozess folgende Schritte: Verwenden und Prüfen eines Decentralized Identifiers des Unternehmens, Authentifizieren der Entität unter Verwendung eines digitalen Registerauszugs, Identifizieren eines offiziellen Vertreters der Entität, d.h. einer für die Entität vertretungsberechtigten natürlichen Person. Das resultierende verifizierbare digitale Credential kann durch die Entität zum Authentifizieren bzw. als Identitätsnachweis im digitale Raum verwendet werden und bestätigt dem Inhaber des verifizierbaren digitalen Credentials, d.h. der Entität, eine qualifizierte Überprüfung der Entität und der in dem verifizierbaren digitalen Credential bereitgestellten entitätsbezogenen Credential durch einen Ausstellerdienst, dessen Ausstellercomputersystem das verifizierbare digitale Credential ausgestellt hat.

Das Verfahren zum Ausstellen des digitalen Credentials für die Entität wird beispielsweise durch die Ausstellanfrage, etwa in Form eines Onlineantrags, gestartet. Sowohl der Decentralized Identifier der Entität als auch die Domain der Entität werden durch das Ausstellercomputersystem geprüft. Die Existenz der Entität wird unter Verwendung eines digitalen Registerauszugs, etwa eines digitale Handelsregisterauszugs, geprüft. Ein offizieller Vertreter der Entität, d.h. eine für die Entität vertretungsberechtigte natürlichen Person, wird identifiziert. Als Ergebnis wird ein verifizierbares digitales Credential ausgestellt.

Als ID-Credential zum Authentifizieren des offiziellen Vertreters der Entität kann beispielsweise verwendet werden: Personal Identification Data aus einer staatlichen Wallet nach elDAS 2.0 Outlinie, Summen von qualifizierten und nicht-qualifizierten elektronischen Beglaubigungen von Attributen ("qualified and non qualified Electronic Attestation of Attributes"), verifiable/anonymous Credentials, wie etwa eine Basis-ID, mittels eID-Funktion des neuen Personalausweis bzw. Smart eID bereitgestellte Attribute.

Bei dem digitalen Credential der Entität kann es sich beispielsweise handeln um ein Verifiable Credentials nach W3C, ein Anonymous Credential nach Hyperledger Indy, eine mobile eID (Nachfolger mobile Driving License) nach ISO 18013-5 und ISO 23220-1, eine elektronische Beglaubigung von Attributen ("Electronic Attestation of Attributes) nach elDAS 2.0 Outline.

Ausführungsformen können den Vorteil haben, dass basierend auf den Prinzipien der Self-Sovereign-Identity (SSI) ein dezentrales Ökosystem digitaler Identitäten auch für Entitäten, bei welchen es sich um juristische Personen anstelle von natürlichen Personen handelt, implementiert werden kann. Dabei können die entsprechenden digitalen Identitäten in Form von digitalen verifizierbaren Credentials, etwa basierend auf entitätsbezogenen Attributen aus einem digitalen Registerauszug, implementiert werden. Identitätsdaten können in Form von entitätsbezogenen Attributen in sicherer und einfacher Form aus einem entsprechenden Registerauszug ausgelesen und als digitales verifizierbares Credential in einem Wallet-Programm bzw. einer ID-Wallet auf einem Computersystem einer Entität hinterlegt werden. Für eine Verwendung des digitalen verifizierbaren Credentials basierend auf der SSI-Infrastruktur kann nutzerseitig Computersystem mit der ID-Wallet ausreichend sein.

Einmal in Form eines digitalen verifizierbaren Credentials auf einem Computersystem hinterlegte entitätsbezogene Attribute können mit dem Computersystem verwendet werden, ohne dass dazu weitere technische Geräte für den Nutzer notwendig sind. Eine Verwendung der entitätsbezogenen Attribute wird damit einfach und nutzerfreundlich.

Ein entsprechendes von einem Inhaber bereitgestelltes digitales verifizierbares Credential wird von einem Empfänger als Prüfer beispielsweise unter Verwendung der SSI-Infrastruktur auf seine Validität geprüft, d.h. verifiziert. Hierzu greift der Prüfer beispielsweise auf die SSI-Infrastruktur zurück, welche eine etwa Blockchain umfasst, die dem Prüfer die für das Verifizieren notwendigen Daten bereitstellt.

Die digitalen verifizierbaren Credentials und damit die entitätsbezogenen Attribute können auf dem Computersystem in sicherer Weise verwahrt werden. Hierzu werden die entsprechend digitalen verifizierbaren Credentials beispielsweise in einer ID-Wallet bzw. in einem der ID-Wallet zugeordneten geschützten Speicherbereich eines Speichers des Computersystems abgespeichert. Insbesondere ermöglicht ein Abspeichern von digitalen verifizierbaren Credentials in einer ID-Wallet ein mehrmaliges Verwenden der entsprechenden Credentials zum sicheren Authentifizieren und Identifizieren Ausweisen der Entität gegenüber Dritten.

Ausführungsformen können den Vorteil haben, dass in effektiver und effizienter Weise ein Ausstellen digitaler verifizierbarer Credentials basierend auf einer SSI-Infrastruktur in Kombination mit einer Infrastruktur zum sicheren Bereitstellen von entitätsbezogenen Attributen bereitgestellt werden kann. Die entitätsbezogenen Attribute werden von dem Ausstellercomputersystem verwendet, um ein digitales verifizierbares Credential für eine Entität auszustellen, welches etwa in einer ID-Wallet der Entität hinterlegt wird. Somit basiert das ausgestellte digitale verifizierbare Credential auf entitätsindividuellen entitätsbezogenen Attributen.

Kryptographisches Schlüsselmaterial kann sicher auf einem Sicherheitselement des Computersystems der Entität gespeichert sein. Beispielsweise wird das entsprechende Schlüsselmaterial in einem Sicherheitselement oder unter Verwendung eines Sicherheitselements gespeichert, das in Form eines Secure Element (SE), einer eSIM, einer elUCC und/oder einer TEE implementiert ist. Das entsprechende Schlüsselmaterial wird beispielsweise von der ID-Wallet zum kryptographisch gesicherten Speichern digitaler verifizierbarer Credentials verwendet. Beispielsweise werden digitalen verifizierbaren Credential unter Verwendung des Schlüsselmaterials verschlüsselt und in verschlüsselter Form in dem geschützten Speicherbereich des Computersystems gespeichert.

Ausführungsformen können den Vorteil haben, dass eine sichere Übertragung von Identitätsdaten einer Entität in Form von entitätsbezogenen Attributen ermöglicht wird, indem die entitätsbezogenen Attribute in Form des digitalen verifizierbaren Credentials etwa in eine ID-Wallet geladen werden. Zur weiteren Verwendung des digitalen verifizierbaren Credentials ist beispielsweise kein ID-Provider notwendig. Ferner ist beispielsweise auch kein weiteres Computerprogramm mehr notwendig. Vielmehr kann das digitale verifizierbare Credential durch einen Nutzer für die Entität allein basierend auf dem Computersystem mit der ID-Wallet verwendet werden.

Selbstbestimmte Identitäten ("Self-Sovereign Identity"/SSI) bezeichnen Identitäten einer dezentralen und nutzerzentrierten Infrastruktur für Identität, welche es ermöglich einem Nutzer eine verteilte, selbstbestimmte, die Privatsphäre schützende und sichere Identität in die Hand zu geben.

Die SSI-Grundprinzipien umfassen: Existenz ("Existence"), Kontrolle ("Control"), Zugang ("Access"), Transparenz Persistenz ("Transparency"), Persistenz ("Persistence"), Portabilität ("Portability"), Interoperabilität ("Interoperability"), Einverständnis ("Consent"), Minimierung ("Minimalization"), Protektion ("Protection"). Das Grundprinzip der Existenz verlangt, dass den einzelnen Nutzern jeweils eine unabhängige Existenz besitzen. Das Grundprinzip der Kontrolle verlangt, dass die Nutzer ihre jeweilige Identität kontrollieren. Das Grundprinzip des Zugangs verlangt, dass die Nutzer jeweils Zugang zu ihren eigenen Daten haben. Das Grundprinzip der Transparenz verlangt, dass Systeme und Algorithmen müssen transparent sind. Das Grundprinzip der Persistenz verlangt, dass Identitäten langlebig sind. Das Grundprinzip der Portabilität verlangt, dass Informationen über und Dienste für Identitäten portabel sind. Das Grundprinzip der Interoperabilität verlangt, dass Identitäten so weit wie möglich nutzbar sein sollen. Das Grundprinzip des Einverständnisses verlangt, dass die Nutzer der Nutzung ihrer Identität jeweils zustimmen müssen. Das Grundprinzip der Minimierung verlangt, dass eine Offenlegung von Aussagen ("Claims"), wie etwa entitätsbezogenen Attributen, minimiert werden. Das Grundprinzip der Protektion verlangt, dass die Rechte des Nutzers jeweils geschützt werden.

Dadurch das die Identitäten und deren Verwendung in die Hand der Nutzer geben werden, umfasst eine SSI-Infrastruktur keine zentrale Rolle, wie einem Identity-Provider, welcher bei jedem Authentifizierungsvorgang, d.h. bei jeder Verwendung von entitätsbezogenen Attributen, involviert ist und somit allwissend über die Aktivitäten der Nutzer Bescheid weiß. Ein Identity-Provider kommt im vorliegenden Fall beispielsweise nur beim Ausstellen von digitalen verifizierbaren Credentials zum Einsatz, nicht aber bei deren Verwendung. Somit erlangt der Identity-Provider auch keine Kenntnis über die Verwendung der entsprechenden entitätsbezogenen Attribute. Dasselbe gilt für Ausstellercomputersysteme, welche die entsprechenden digitalen verifizierbaren Credentials ausstellen. Auch diese sind nicht in die Verwendung der entitätsbezogenen Attribute bzw. in das Prüfen der von ihnen ausgestellten digitalen verifizierbaren Credentials involviert. Die Prüfung erfolgt vielmehr durch einen unabhängigen Prüfer, welcher hierzu auf eine Blockchain der SSI-Infrastruktur zurückgreift. Somit erlagen auch die Ausstellercomputersysteme keine Kenntnis über die Verwendung der entitätsbezogenen Attribute.

Die entsprechende Blockchain implementiert die SSI-Infrastruktur unter Verwendung der Distributed Ledger Technologie (DLT), wodurch ein öffentlich zugänglicher und dezentraler Speicher für Prüfdaten in Form der Blockchain bereitgestellt wird, der beispielsweise zugleich die Privatsphäre der Nutzer zu gewährleistet vermag.

In einem SSI-Dreieck, welches ein Ausstellen und Verwenden eines digitalen verifizierbaren Credentials beschreibt, sind drei Rollen definiert: Aussteller ("Issuer"), Inhaber ("Holder") und Prüfer ("Verifier"). Der Inhaber verwaltet verschiedene digitale verifizierbare Credentials (Nachweise) in einer digitalen Wallet bzw. einem virtuellen Portemonnaie. Diese Credentials sind von ein oder mehreren Ausstellern ausgestellt und beinhalten in der Regel Aussagen ("Claims") über den Inhaber, d.h. die Entität in Form von entitätsbezogenen Attributen. Bei derartigen Aussagen über den Inhaber bzw. die Entität handelt es sich um entitätsbezogene Attribute, d.h. der Entität zugeordnete Attribute.

Der Inhaber kann beispielsweise über eine Mehrzahl von unterschiedlichen digitalen verifizierbaren Credentials mit unterschiedlichen entitätsbezogenen Attributen verfügen. Der Inhaber kann dadurch selbstbestimmt entscheiden welche entitätsbezogenen Attribute er einem Prüfer zur Prüfung übermittelt. Der Prüfer kann auf Grundlage öffentlicher Prüfdaten, welche beispielsweise eine Blockchain bereitstellt, die Authentizität und Unverfälschbarkeit der übermittelten digitalen verifizierbaren Credentials und damit der bereitgestellten entitätsbezogenen Attribute sicherstellen. Die Prüfdaten könnenvon einer dezentralen Infrastruktur basierend auf einer Blockchain bzw. einem verteilten Register ("distributed Ledger") des SSI-Ökosystems bereitgestellt werden. Die Prüfdaten können neben Informationen über die Identität des Ausstellers und über das Credential-Schema beispielsweise auch Angaben zu revozierten Credentials umfassen. Die Prüfdaten umfassen beispielsweise keine personenbezogenen Daten des Inhabers der digitalen verifizierbaren Credentials. Somit müssen und werden keine personenbezogenen Daten öffentlich zur Verfügung gestellt. Der Ausstellungsvorgang kann dadurch von dem Authentifizierungsvorgang entkoppelt werden, da für die Prüfung keine Kontaktaufnahme zu dem Aussteller erforderlich ist. Wie in der analogen Welt üblich, erfährt der Aussteller der Nachweise dabei nichts von deren Verwendung, was ein wichtiger Beitrag zur Selbstbestimmung der Nutzer und zur Sicherung von deren Privatsphäre darstellt.

Im Gegensatz zu dem analogen Prozess können im Zuge einer Verwendung von SSI zusätzliche Mechanismen, insbesondere technisch implementierte Mechanismen, zum Unterstützen der Privatsphäre der Inhaber der digitalen verifizierbaren Credentials bereitgestellt werden. Beispielsweise kann durch eine selektive Offenlegung von Aussagen bzw. entitätsbezogenen Attributen eines digitalen verifizierbaren Credentials oder logische Aussagen über entsprechende entitätsbezogene Attribute die Datenminimierung gefördert werden. Eine Offenlegung von entitätsbezogenen Attributen kann bei SSI beispielsweise mit einem interaktiven kryptografischen Beweis umgesetzt werden, sodass der Inhaber häufig auch als "Prover" bezeichnet wird. Bei jeder Verbindung zu einer Entität kann ein Inhaber beispielsweise jeweils unter einem neuen Pseudonym auftreten, so dass er nur so viel wie nötig und so wenig wie möglich über sich bekannt geben muss und somiteine unerwünschte Nachverfolgbarkeit erschwert wird. Höchstmögliche Kontrolle und Transparenz über die Daten schaffen Vertrauen beim Nutzer und können dessen Akzeptanz für SSI-basierte Verfahren erhöhen. Durch offene Standards gesicherte Portabilität und Interoperabilität kann beispielsweise ein langfristiger Erhalt eines SSI-Ökosystems gesichert werden.

Unter Verwendung von digitalen Credentials mit entitätsbezogenen Attributen kann SSI kann auch für Unternehmen oder die öffentliche Verwaltung einen Mehrwert bereitstellen, indem ein einheitlicher Standard zum Austausch von Identitätsinformationen geschaffen wird, welcher eine gemeinsame, verteilte und damit ausfallsichere Infrastruktur bietet und eine einfache und sichere Überprüfung von Daten gewährleistet ohne dabei selbst den Aussteller der hierzu verwendeten digitalen verifizierbaren Credentials kontaktieren zu müssen. Damit kann beispielsweise eine Verarbeitung Identitätsinformationen in Form von entsprechenden digitalen verifizierbaren Credentials beschleunigt werden, da etwa über eine Schnittstelle mehrere digitalen verifizierbaren Credentials verschiedener Aussteller gleichzeitig überprüft werden können und sich somit ein kostensparende und schlanker Datenverarbeitungsprozess implementieren lässt. Es ist keine Kontaktaufnahme zu mehreren verschiedenen Ausstellern notwendig. Vielmehr kann für eine Verifizierung die Blockchain der SSI-Infrastruktur ausreichen.

In der W3C werden dezentrale Identifikatoren ("Decentralized Identifiers"/DIDs) (s. https://www.w3.org/TR/did-core/) und digitale verifizierbare Credentials ("Verifiable Credentials"/VC) (s. https://www.w3.org/TR/vc-data-model/) spezifiziert. Diese Standards ermöglichen die Identifizierung eines DID-Subjekts ("DID subject"), d.h. einer Entität, wie etwa einem Nutzer oder einer Organisation etc., ohne von zentralen Diensten abhängig zu sein. In der Decentralized Identity Foundation (DIF) (s. https://identity.foundation/) findet sich eine Standardisierung zu DIDComm (https://github.com/decentralized-identity/DIDComm-messaging), einer sicheren und auf DIDs aufbauende dezentrale Kommunikationsschicht.

Mit digital verifizierbaren Credentials können überprüfbare entitätsbezogene Attribute zwischen einem Aussteller und Inhaber bzw. Inhaber und einem Prüfer direkt ausgetauscht werden.

Ausführungsformen können ferner eine Möglichkeit implementieren, ausgestellte digitale verifizierbare Credentials zurückzurufen. Dies kann beispielsweise erforderlich werden aufgrund fehlerhaft ausgestellter oder veralteter Daten ausgestellt, aufgrund einer missbräuchlichen Nutzung des digitalen verifizierbaren Credentials oder eines Verlusts eines zugehörigen privaten kryptographischen Schlüssels. Hierbei zeichnen sich beispielsweise insbesondere zwei Punkte als Privatsphäre fördernde Mechanismen aus: Zum einen ist für eine Überprüfung der Gültigkeit eines digitalen verifizierbaren Credentials keine direkte Verbindung zu dem Aussteller notwendig. Stattdessen werden öffentlich zugängliche und hochverfügbare Prüfdaten aus der Blockchain verwendet. Zum anderen werden beispielsweise auch in diesem Kontext ZKPs verwendet, so dass auch bei dieser Prüfung eine Korrelation zwischen verschiedenen Vorgängen derselben Person verhindert werden. Dies kann beispielsweise durch einen Prüfalgorithmus basierend auf einem kryptografischen Akkumulator implementiert werden.

Für die digitalen verifizierbaren Credentials wird beispielsweise eine Strukturierung mittels JSON-LD verwendet.

Unter einem "ID-Token" wird hier ein tragbares elektronisches Gerät verstanden, zum Beispiel eine Chipkarte oder ein Dokument, auf welchem personenbezogene Attribute eines Nutzers, d.h. Nutzerattribute, gespeichert sind. Unter einem "Dokument" wird insbesondere ein Ausweis-, Wert- oder Sicherheitsdokument verstanden, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Unter einem Sicherheitselement wird ein gesichertes Element eines mobilen Endgeräts verstanden, welches kryptographische Mittel bereitstellt. Diese kryptographischen Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher Applets und/oder vertrauliche und/oder kryptographische Daten gemäß vordefinierten Regeln und Sicherheitsanforderungen von zuverlässig identifizierten vertrauenswürdigen Instanzen gespeichert und so berechtigten Anwendungsprogrammen, wie einer Anwendungswallet, und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Ein Sicherheitselement kann beispielsweise in Form eines Secure Element (SE) implementiert sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Ein solcher Key-Store bzw. Sicherheitselement kann auch als Teil des Hauptprozessors implementiert sein, beispielsweise in einer TEE ("Trusted Excecution Environment"). Beispielsweise kann das Sicherheitselement unter Verwendung einer TEE implementiert sein. Sicherheitselemente sind beispielsweise als Hardware und/oder Firmware implementiert. Nach Ausführungsformen können Sicherheitselemente bzw. Key Stores auch als Software implementiert sein. Zwei Sicherheitselemente sind beispielsweise unabhängig voneinander, wenn es keine gemeinsame Instanz gibt, welche zugriffsberechtigt für beide Sicherheitselemente ist.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen. Bei der Kommunikationsschnittstelle kann es sich um eine interne Schnittstelle oder um eine externe Schnittstelle handeln.

Bei den verschlüsselten Kommunikationskanälen handelt es sich beispielsweise um verschlüsselte Ende-zu-Ende-Verbindungen. Unter einer "verschlüsselten Ende-zu-Ende-Verbindung" bzw. einem "verschlüsselten Ende-zu-Ende-Kommunikationskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, so dass Zwischenstationen aufgrund der Verschlüsslung keine Kenntnis vom Inhalt der übertragenen Daten erlangen können. Die Verbindung wird durch die Verschlüsselung kryptographisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTPS) Protokolls.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen kryptographischen Schlüssel, welcher zur Ver- und/oder Entschlüsselung von Daten verwendet wird und an Dritte, beispielsweise an einen Sender oder Empfänger von Daten, weitergegeben werden darf, sowie einem privaten kryptographischen Schlüssel, welcher zur Ver- und/oder Entschlüsselung aber auch zur Signatur von Daten verwendet wird und im Regelfall geheim gehalten werden muss. Der öffentliche Schlüssel ermöglicht es jedermann Daten für den Inhaber des privaten kryptographischen Schlüssels zu verschlüsseln oder mit dem privaten kryptographischen Schlüssel erstellte digitale Signaturen zu prüfen. Ein privater Schlüssel ermöglicht es seinem Inhaber mit dem öffentlichen kryptographischen Schlüssel verschlüsselte Daten zu entschlüsseln oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des für die Signatur verwendeten asymmetrischen Schlüsselpaars. Der Signaturempfänger verfügt lediglich über den öffentlichen kryptographischen Schlüssel, d.h. Signaturprüfschlüssel, des für die Signatur verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnete Hashwert mit dem Ergebnis der Entschlüsselung überein ist die Signatur korrekt. Wird zudem die Authentizität des Signaturprüfschlüssels, etwa durch ein Zertifikat, insbesondere ein PKI-Zertifikat, bestätigt, ist die Signatur valide.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen kryptographischen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikatausstellers zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat umfasst strukturierte Daten, welche zusätzlich Rechte der Identität definieren.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen kryptographischen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen kryptographischen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen kryptographischen Schlüssels bereitstellen, wenn der zu dem Signaturprüfschlüssel gehörende private Schlüssel als Signaturschlüssel verwendet wurde. Dadurch, dass ein ZDA /VDA ein Zertifikat in Assoziation mit einem öffentlichen kryptographischen Schlüssel der Allgemeinheit zur Verfügung stellt, ermöglicht sie es den Nutzern asymmetrischer Kryptosysteme den öffentlichen kryptographischen Schlüssel einer Identität, beispielsweise einer Person, einer Organisation, oder Computersystem, zuzuordnen.

Bei einem Computer bzw. einem Computersystem kann es sich zum Beispiel um einen stationären Computer, wie etwa einen Personal Computer (PC), Serviceterminal oder einen Server, oder um einen mobilen tragbaren Computer, wie etwa einen Laptop, ein Tablet, ein Smartphone oder einen andern Smart Device, handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Nach Ausführungsformen umfasst die Ausstellanfrage eine Register-ID der Entität, wobei die Registerabfrage die Register-ID umfasst. Ausführungsformen können den Vorteil haben, das anhand der Register-ID eindeutig bestimmt werden kann, welcher Registereintrag in dem Register als Registereintrag der Entität zu prüfen ist bzw. für welchen Registereintrag ein digitaler Registerauszug durch das Ausstellercomputersystem anzufragen ist. Beispielsweise identifiziert die Register-ID neben dem Registereintrag in dem Register auch das abzufragende Register. Beispielsweise sind zusätzlich zu der Register-ID zusätzliche Angaben umfasst, welche das Register identifizieren, in welchem der Registereintrag mittels der Register-ID abzufragen ist.

Nach Ausführungsformen ruft das Ausstellercomputersystem die Domain der Entität auf und liest aus der Domain die Register-ID aus. Beispielsweise wird die Register-ID aus einem von der Domain umfassten Impressum aus.

Nach Ausführungsformen umfasst die Registerabfrage eine Suchanfrage nach Einträgen der Entität. Ausführungsformen können den Vorteil haben, dass beispielsweise keine Register-ID in der Ausstellanfrage anzugeben wird. Beispielsweise fragt das Ausstellercomputersystem ein für entsprechender Registerabfragen festgelegtes Register ab. Beispielsweise wählt das Ausstellercomputersystem selbst ein abzufragendes Register aus einer vorgegebenen Mehrzahl von Registern aus. Beispielsweise umfasst die Suchanfrage einen Namen, unter welchem die Entität firmiert, und durchsucht mittels der Suchanfrage das Register nach einem Registereintrag für eine Entität mit dem angefragten Namen.

Nach Ausführungsformen wird eine Mehrzahl von Registerabfragen über das Netzwerk an eine Mehrzahl von Registercomputersystemen gesendet. Ausführungsformen können den Vorteil haben, dass eine Mehrzahl von Registern verwendet werden kann. Beispielsweise kann die Mehrzahl von Registern nach einem passenden Registereintrag der Entität durchsucht werden.

Nach Ausführungsformen wird, in Antwort auf das Senden der Registerabfrage, eine Mehrzahl von digitalen Registerauszügen der Entität über das Netzwerk von der Mehrzahl von Registercomputersystemen empfangen. Das digitale Credential mit den entitätsbezogenen Attributen wird unter Verwendung der Mehrzahl von digitalen Registerauszügen ausgestellt. Ausführungsformen können den Vorteil haben, dass eine Mehrzahl von Registern verwendet werden kann. Beispielsweise können aus unterschiedlichen Registerauszügen unterschiedliche entitätsbezogene Attribute der Entität ausgelesen und zum Erstellen des digitalen Credentials verwendet werden.

Nach Ausführungsformen umfasst das Prüfen der Verknüpfung zwischen der Domain und dem Decentralized Identifier ein Prüfen, ob unter der Domain eine Referenz auf den Decentralized Identifier hinterlegt ist. Ausführungsformen können den Vorteil haben, dass durch die Referenz auf den Decentralized Identifier eine Verknüpfung zwischen der Domain und dem Decentralized Identifier implementiert und durch das Ausstellercomputersystem über das Netzwerk digital geprüft werden. Beispielsweise kann die Referenz auf die Decentralized Identifier nur von einem berechtigten Inhaber der Domain eingetragen werden.

Nach Ausführungsformen umfasst das Prüfen der Verknüpfung zwischen der Domain und dem Decentralized Identifier ein Aufrufen eines Decentralized Identifier Dokuments des Decentralized Identifier und ein Prüfen, ob das Decentralized Identifier Dokument eine Referenz auf die Domain umfasst. Ausführungsformen können den Vorteil haben, dass durch die Referenz auf die Domain eine Verknüpfung zwischen der Domain und dem Decentralized Identifier implementiert und durch das Ausstellercomputersystem digital geprüft werden. Beispielsweise kann die Referenz auf die Domain nur von einem berechtigten Austeller des Decentralized Identifier in das Decentralized Identifier Dokument eingetragen werden.

Nach Ausführungsformen umfasst das Verfahren ferner ein Prüfen einer Kontrolle des anfragenden Computersystems über die Domain. Ausführungsformen können den Vorteil haben, dass anhand dieser Prüfung festgestellt werden kann, ob es sich bei dem anfragenden Computersystem tatsächlich um ein Computersystem der Entität handelt, deren Domain in der Ausstellanfrage angeben ist. Somit kann digital geprüft werden, ob der Antragsteller, welcher die Domain für die Ausstelleranfrage verwendet auch tatsächlich zu einer Verwendung der Domain berechtigt ist.

Nach Ausführungsformen erfolgt das Prüfen der Kontrolle unter Verwendung eines Challenge-Response-Verfahrens. Das Ausstellercomputersystem sendet eine Challenge zur Veröffentlichung in der Domain über das Netzwerk an das anfragende Computersystem. Das Ausstellercomputersystem prüft die Response in Form der Veröffentlichung in der Domain. Ausführungsformen können den Vorteil haben, dass das anfragende Computersystem durch die Veröffentlichung der Challenge in der Domain nachweisen kann, dass es Kontrolle über die Domain besitzt, d.h. berechtigt ist Daten in der Domain zu veröffentlichen. Beispielsweise handelt es sich bei der Challenge einen Zufallswert, etwa eine Zufallszahl.

Nach Ausführungsformen umfasst die E-Mail die Einladung zum Aufbau des verschlüsselten Kommunikationskanals in Form eines maschinenlesbaren optischen Codes. Ausführungsformen können den Vorteil haben, dass der E-Mail-Empfänger, d.h. der offizielle Vertreter der Entität, dazu in die Lage versetzt wird, die Einladung zum Aufbau des verschlüsselten Kommunikationskanals mit seiner ID-Wallet zu erfassen und den Aufbau durch die ID-Wallet zu initiieren. Bei dem maschinenlesbaren optischen Code handelt es sich beispielsweise um einen zweidimensionalen Code, beispielsweise einen QR-Code.

Nach Ausführungsformen handelt es sich bei dem verschlüsselten Kommunikationskanal um einen mittel Ende-zu-Ende-Verschlüsselung verschlüsselten Kommunikationskanal. Nach Ausführungsformen handelt es sich bei dem verschlüsselten Kommunikationskanal um einen DIDComm-Kanal. Beispielsweise handelt es sich bei dem verschlüsselten Kommunikationskanal um einen DIDComm-Kanal, d.h. einen unter Verwendung des DIDComm-Verschlüsselungsprotokolls verschlüsselten Kommunikationskanals. Eine Standardisierung zu DIDComm (https://github.com/decentralized-identity/DIDComm-messaging), einer sicheren und auf DIDs aufbauende dezentrale Kommunikationsschicht, wird von der Decentralized Identity Foundation (DIF) (s. https://identity.foundation/) bereitgestellt. Ausführungsformen können den Vorteil haben, dass der DIDComm-Kanal eine sicher verschlüsselte Kommunikationsverbindung bereitstellt.

Nach Ausführungsformen handelt es sich bei dem Ausstellercomputersystems um ein Computersystem eines Ausstellerdienstes einer SSI-Infrastruktur.

Ein SSI-Stack teilt sich beispielsweise in vier Schichten auf. Das SSI-Schichtmodell umfasst dabei auf der ersten, untersten Schicht öffentliche Einrichtungen ("Public Utilities") bzw. Infrastruktureinrichtungen, auf der zweiten Schicht Protokolle für kryptografisch sichere Verbindungen beispielsweise DIDComm Peer-to-Peer-Protokolle ("DIDComm Peerto Peer Protocol"), auf der dritten Schicht Datenaustauschprotokolle ("Data Exchange Protocols") und auf der vierten, obersten Schicht das Anwendungsökosystem ("Application Ecosystem"). Das Fundament und die Infrastruktur werden durch eine Blockchain, d.h. ein verteiltes Register bzw. einen verteilten Datenspeicher ("Distributed Ledger") gebildet. Die Blockchain wird von ausgewählten Knoten betrieben und enthält die öffentlichen Daten der teilnehmenden Entitäten. Die Identitäten der Teilnehmer werden über dezentrale Identifikatoren ("Decentralized Identifiers"/DIDs) realisiert. Ein DID ist, vergleichbar einer URL, auflösbar zu einem Identifikationsdokument bzw. DID-Dokument ("DID document"), welches in der Blockchain gespeichert ist. In dem DID-Dokument sind Daten wie Service-Schnittstellen oder öffentliche Schlüssel hinterlegt. Die Aussteller legen zudem Metadaten zu Credentials in der Blockchain ab, zum Beispiel Schemata oder Revozierungsdaten.

Die über DIDs repräsentierten Identitäten können auf der darüber liegenden Schicht eine kryptografisch sichere Verbindung aufbauen. Das als "DIDComm" standardisierte Protokoll definiert Aktivitäten vom Verbindungsaufbau bis zum Austausch von Nachrichten. Die DIDs und das zugehörige Schlüsselmaterial werden in Wallets gespeichert und von entsprechenden Computerprogrammen bzw. Softwareagenten verwendet.

In Schicht drei erfolgt der eigentliche Austausch und die Verbindung der drei Parteien des SSI-Ökosystems. Aussteller beziehungsweise Prüfer stehen in direkter Verbindung zu dem Inhaber, der Aussteller stellt dem Inhaber digitale verifizierbare Credentials aus, diese können von dem Prüfer angefragt und von dem Inhaber präsentiert werden. Das Vertrauen zwischen Prüfer und Aussteller wird indirekt über das Netzwerk abgebildet.

Schlussendlich stellt die vierte Schicht die Anwendung der SSI-Technologie dar, beispielsweise in Geschäftsprozessen, Behördengängen und anderen Nachweisen von Identitäten und Beglaubigungen dar. Der technische SSI-Stack wird begleitet von einem organisatorisch-rechtlichen Rahmen, der die Regeln des SSI-Netzwerks festlegt, sowie die rechtliche und regulatorische Verbindung zur realen Welt klärt.

SSI ermöglicht es eine interoperable und wiederverwendbare Ebene für Identifizierungs- und Authentifizierungsprozesse bereitzustellen. Beispielsweise kann der Betrieb der SSI-Infrastruktur von einem festen Kreis an Netzwerkbetreibern sowie durch organisatorische und technische Maßnahmen sichergestellt werden. Um als solide Basis für die beteiligten Teilnehmer, z.B. Aussteller, Inhaber, Prüfer, zu fungieren, erfüllt die SSI-Infrastruktur beispielsweise insbesondere folgende Eigenschaften: Es wird eine Unverfälschbarkeit und/oder eine eindeutige Zuordnung von Transaktionen in der Blockchain zu deren Autor sichergestellt, wodurch sich die Authentizität der Daten gewährleisten lässt. Durch eine Überprüfbarkeit des aktuellen Zustands der Blockchain kann die Integrität der von der Blockchain bereitgestellten Daten gewährleistet werden. Selbst bei mehreren fehlerhaften Knotenbetreibern lässt sich die Ausfallsicherheit des Blockchain-Netzwerks sicherstellen und damit die Verfügbarkeit, Redundanz und Robustheit der Datenspeicherung. Da es sich bei den in der Blockchain gespeicherten Prüfdaten, beispielsweise öffentlich zugänglich abgespeicherten Prüfdaten, um nicht personenbezogene Prüfdaten handelt, die gerade öffentlich zugänglich und zu einer öffentlichen Entität zuordenbar sein sollen, spielen Vertraulichkeit und Anonymität in dieser Hinsicht keine Rolle.

Die verwendete SSI-Infrastruktur umfasst beispielsweise eine öffentliche, genehmigungspflichtige, d.h. public permissioned, Blockchain. Diese Ledger-Technologie verbindet einerseits Eigenschaften öffentlicher, genehmigungsloser ("public permissionless") Blockchain-Varianten, wie etwa Bitcoin und Ethereum, mit Eigenschaften von privaten, genehmigungspflichtigen (private permissioned) Blockchain-Varianten, wie etwa R3 Corda und Hyperledger Fabric. Das Blockchain-Netzwerk umfasst mehreren Blockchain-Servern, welche beispielsweise als Netzwerkknoten bzw. Validierungsknoten ("Validator Nodes") dienen, die einem genehmigungspflichtigen Blockchain-Netzwerk entsprechend von speziell befähigten beziehungsweise ernannten Akteuren ("Stewards") betrieben werden. Die Netzwerkknoten bilden untereinander Vertrauen durch beispielsweise unter Verwendung eines Konsensalgorithmus. Beispielsweise kann ein Konsens mit dem Plenum-Protokoll gebildet werden, einem Redundant Byzantine Fault Tolerance Algorithmus (RBFT), welcher eine redundante Version des als sicher evaluierten PBFT darstellt. Algorithmus bedingt für eine maximale Anzahl F von bösartig oder fehlerhaft agierenden Netzwerkknoten eine Anzahl N = 3F + 1 von Gesamtknoten im Blockchain-Netzwerk. Eine sinnvolle Größe eines Blockchain-Netzwerks beinhaltet beispielsweise 25 Netzwerkknoten und/oder um die 25 Netzwerkknoten, sodass eine gute Ausfallsicherheit gewährleistet und der entsprechende Konsensalgorithmus möglichst effizient arbeitet kann. Die Effizienz von RBFT und der hohe Durchsatz bei geringem Ressourcenaufwand entspricht dabei den Vorteilen einer genehmigungspflichtigen (permissioned) Blockchain.

Ein öffentliches genehmigungspflichtige Registernetzwerk ("public permissioned ledger") bzw. Blockchain-Netzwerk kann beispielsweise ein die Privatsphäre von Nutzer in vorteilhafter Weise förderndes Identitätsnetzwerk darstellen. Da auf dem Ledger bzw. in der Blockchain lediglich öffentliche Informationen von Ausstellern und Prüfern, insbesondere institutionellen Ausstellern und Prüfern, gespeichert sind, jedoch keine nutzerbezogenen Daten, lassen sich hiermit klassische DLT-Probleme wie Skalierung, Effizienz und Energieverbrauch effektiv lösen.

Lesezugriffe auf das Blockchain-Netzwerk bzw. die von dem Blockchain-Netzwerk bereitgestellte Blockchain sind beispielsweise frei zugänglich und erfordern keine Authentisierung, analog zu den typischen Eigenschaften einer öffentlichen ("public") Blockchain. Schreibzugriffe sind jedoch beispielsweise genehmigungspflichtig und bedürfen neben der Signatur des Autors zusätzlich einer Zustimmung eines Genehmigungsberechtigten ("Endorser"). Als initiale Transaktion erstellt ein Autor beispielsweise seine DID und hinterlegt seinen abgeleiteten öffentlichen kryptographischen Schlüssel. Alle weiteren Transaktionen signiert der Autor selbst mit seinem zugehörigen privaten kryptographischen Schlüssel, sodass die Authentizität der Daten gewährleistet und einfach überprüfbar ist. Die so entstehenden Transaktionen sendet der Autor an mehrere Netzwerkknoten des Blockchain-netzwerks und sobald er mehr als F + 1 positive Antworten empfangen hat, ist die Finalität bzw. Konsistenz gegeben. In einem entsprechenden Blockchain-Netzwerk kann der Konsens über die entsprechenden Daten beispielsweise mittels einer Boneh-Lynn-Shacham (BLS)-Multisignatur abgespeichert werden, welche eine zweifelsfreie Konsistenz der Netzwerkknoten beweist, sodass bei einer Leseanfrage nur ein einziger Knoten angefragt werden muss. Die gespeicherten Transaktionen werden beispielsweise als geordnete Liste mit einem Merkle-Tree gespeichert. Der korrekte Zustand der Blockchain kann anhand eines aktuellen Zustandsnachweis ("State Proof") und eines Auditierungspfads des Merkle-Tree überprüft werden. Die Authentizität der Genehmigungsberechtigten kann beispielsweise unter Verwendung ihnen zugeordneter öffentlicher kryptographischer Schlüssel aus einer Genesisdatei ("Genesis File") des Blockchain-Netzwerks sichergestellt werden.

Um die Regeln des genehmigungspflichtigen Blockchain-Netzwerks durchzusetzen, ist der Blockchain beispielsweise eine eigene Konfiguration und ein integriertes Rechte und Regelsystem zugeordnet. Dieses System umfasst beispielsweise die folgenden: Ein Verwalter ("Trustee") verwaltet die Rechte anderer Mitglieder und kann das Regelwerk festlegen. Ein Akteur ("Steward") betreibt einen Netzwerkknoten. Ein Genehmigungsberechtigter ("Endorser") bestätigt den Schreibzugriff regulärer Datentransaktionen. Ein Netzwerküberwacher ("Network Monitor") überwacht und analysiert die Metadaten für ordnungsgemäßen Betrieb des Netzwerks

Eine DID eines Ausstellers wird beispielsweise zusammen mit einem öffentlichen kryptografischen Schlüssel des Ausstellers in der Blockchain bzw. dem Blockchain-Netzwerk hinterlegt. Dessen Identität kann also innerhalb des Blockchain-Netzwerks über diese öffentlichen kryptografischen Schlüssel verifiziert werden. Durch technische Maßnahmen kann eine Unverfälschbarkeit von ausgestellten Daten bzw. eines digitalen verifizierbaren Credentials gewährleistet, d.h. dessen Integrität und Authentizität. Ein Prüfer überprüft die Unverfälschbarkeit, indem er die Signatur des Ausstellers validiert. Hierfür kann beispielsweise ein Signaturschema verwendet werden, welches einen Zero Knowledge Proof (ZKPs) unterstützt, wie etwa Camenisch-Lysyanskaya oder BBS+ Signaturverfahren. Im Rahmen einer solchen Signaturprüfung, erfährt der Prüfer lediglich, dass der Inhaber die Kenntnis einer gültigen Signatur der offengelegten entitätsbezogenen Attribute beweist. Hierdurch können beispielsweise eine selektive Offenlegung und/oder logische Aussagen unterstützt werden.

Nach Ausführungsformen umfasst das Verfahren ferner ein Verwenden des digitalen Credentials durch das anfragende Computersystem. Das Verwenden umfasst ein Senden des digitalen Credentials an ein authentifizierendes Computersystem im Zuge eines Authentisierens der Entität gegenüber dem authentifizierenden Computersystem. Ausführungsformen können den Vorteil haben, dass sich das anfragende Computersystem unter Verwendung des digitalen Credentials gegenüber dem authentifizierenden Computersystem authentisieren kann. Beispielsweise weist das das anfragende Computersystem unter Verwendung des digitalen Credentials gegenüber einem authentifizierenden Computersystem die Identität der Entität nach.

Im Falle einer gegenseitigen Authentifizierung umfasst das Verfahren beispielsweise weiter ein Empfangen eines digitalen Credential von dem authentifizierenden Computersystem durch das anfragende Computersystem über das Netzwerk und ein Verifizieren des empfangenen digitalen Credential

Ausführungsformen umfassen ein Ausstellercomputersystem zum Ausstellen eines digitalen Credentials für eine Entität. Das Ausstellercomputersystem umfasst einen ersten Prozessor, einen ersten Speicher mit ersten Programminstruktionen und eine erste Kommunikationsschnittstelle zur Kommunikation über ein Netzwerk.

Ein Ausführen der ersten Programminstruktionen durch den ersten Prozessor des Ausstellercomputersystem veranlasst den ersten Prozessor dazu, das Ausstellercomputersystem zu steuern zum:
- Empfangen einer Ausstellanfrage zum Ausstellen des digitalen Credentials über ein Netzwerk von einem anfragenden Computersystem, wobei die Ausstellanfrage eine der anfragenden Entität zugeordnete Domain, eine E-Mail-Adresse eines offiziellen Vertreters der Entität und einen Decentralized Identifier umfasst,
- Senden einer Registerabfrage nach einem Registereintrag als Existenznachweis der Entität über das Netzwerk an ein Registercomputersystem,
- Empfangen eines digitalen Registerauszugs der Entität als Existenznachweis über das Netzwerk von dem Registercomputersystem,
- Prüfen einer Verknüpfung zwischen der Domain und dem Decentralized Identifier,
- Senden einer E-Mail mit einer Anfrage zum Aufbau eines verschlüsselten Kommunikationskanals an die E-Mail-Adresse,
- in Antwort auf das Senden der E-Mail, Aufbau eines verschlüsselten Kommunikationskanals zwischen dem Ausstellercomputersystem und einer ID-Wallet des offiziellen Vertreters der Entität über das Netzwerk,
- Senden einer Anfrage nach einem digitalen ID-Credential des offiziellen Vertreters der Entität mit personenbezogenen Attributen des Vertreters über den verschlüsselten Kommunikationskanal,
- In Antwort auf das Senden der Anfrage, Empfangen des digitalen ID-Credential über den verschlüsselten Kommunikationskanal,
- Verifizieren der Authentizität des digitalen ID-Credentials,
- Prüfen der Vertretungsberechtigung des offiziellen Vertreters der Entität unter Verwendung der personenbezogenen Attribute des digitalen ID-Credential und des digitalen Registerauszugs der Entität,
- auf eine erfolgreiche Prüfung der Vertretungsberechtigung hin, Ausstellen des digitalen Credentials mit entitätsbezogenen Attributen unter Verwendung des digitalen Registerauszugs,
- Senden des digitalen Credentials in Antwort auf die empfangen Ausstellanfrage über das Netzwerk an das anfragende Computersystem.

Ausführungsformen des Ausstellercomputersystems sind dazu konfiguriert jeden der zuvor genannten, durch das Ausstellercomputersystem ausgeführten Schritte der Ausführungsformen des Verfahrens zum Ausstellen eines digitalen Credentials für eine Entität auszuführen.

Ausführungsformen umfassen ein System, welches ein Ausstellercomputersystem nach einer der zuvor genannten Ausführungsformen und ein anfragendes Computersystem umfasst. Das anfragende Computersystem umfasst einen zweiten Prozessor, einen zweiten Speicher mit zweiten Programminstruktionen und eine zweite Kommunikationsschnittstelle zur Kommunikation über das Netzwerk.

Ein Ausführen der zweiten Programminstruktionen durch den zweiten Prozessor des anfragenden Computersystems veranlasst den zweiten Prozessor dazu, das anfragende Computersystem zu steuern zum:
- Erstellen der Ausstellanfrage zum Ausstellen des digitalen Credentials,
- Senden der Ausstellanfrage über das Netzwerk an das Ausstellercomputersystem,
- in Antwort auf die gesendete Ausstellanfrage, Empfangen des digitalen Credentials über das Netzwerk von dem Ausstellercomputersystem.

Nach Ausführungsformen umfasst das anfragende Computersystem zur Speicherung des empfangenen digitalen Credentials einen SSI-Agent, welcher beispielsweise eine ID-Wallet zur Speicherung des digitalen Credentials umfassen kann.

Nach Ausführungsformen veranlasst das Ausführen der zweiten Programminstruktionen durch den zweiten Prozessor des anfragenden Computersystems den zweiten Prozessor ferner das anfragende Computersystem zu einem Verwenden des empfangenen digitalen Credentials. Das Verwenden umfasst ein Senden des digitalen Credentials an ein authentifizierendes Computersystem im Zuge eines Authentisierens der Entität gegenüber dem authentifizierenden Computersystem.

Im Weiteren werden Ausführungsformen der Erfindung mit Bezugnahme auf die Zeichnungen näher erläutert. Es zeigen:
- Figuren 1A, B: ein schematisches Flussdiagramm eines exemplarischen Verfahrens zum Ausstellen eines digitalen Credentials für eine Entität,
- Figur 2: ein schematisches Flussdiagramm eines exemplarischen Verfahrens zum Ausstellen eines digitalen Credentials für eine Entität,
- Figur 3: ein schematisches Blockdiagramm eines einer exemplarischen Ausstellanfrage,
- Figur 4: ein schematisches Blockdiagramm einer exemplarischen Einladung zum Aufbau eines verschlüsselten Kommunikationskanals,
- Figur 5: ein schematisches Blockdiagramm eines exemplarischen Systems zum Ausstellen eines digitalen Credentials für eine Entität,
- Figur 6: ein schematisches Blockdiagramm eines weiteren exemplarischen Systems zum Ausstellen eines digitalen Credentials für eine Entität,
- Figur 7: ein schematisches Flussdiagramm eines exemplarischen Verfahrens zum Verwenden eines digitalen Credentials,
- Figuren 8A, B: ein schematisches Blockdiagramm eines weiteren exemplarischen Systems zum Ausstellen eines digitalen Credentials für eine Entität,
- Figur 9: ein schematisches Flussdiagramm eines exemplarischen Verfahrens zum Anfragen eines digitalen Credentials für eine Entität,
- Figur 10: ein schematisches Flussdiagramm eines exemplarischen Verfahrens zum Authentisieren unter Verwendung eines digitalen Credentials, und
- Figur 11: ein schematisches Flussdiagramm eines exemplarischen Verfahrens zum Authentifizieren unter Verwendung eines digitalen Credentials.

Elemente der nachfolgenden Ausführungsformen, die einander entsprechen, werden mit denselben Bezugszeichen gekennzeichnet.

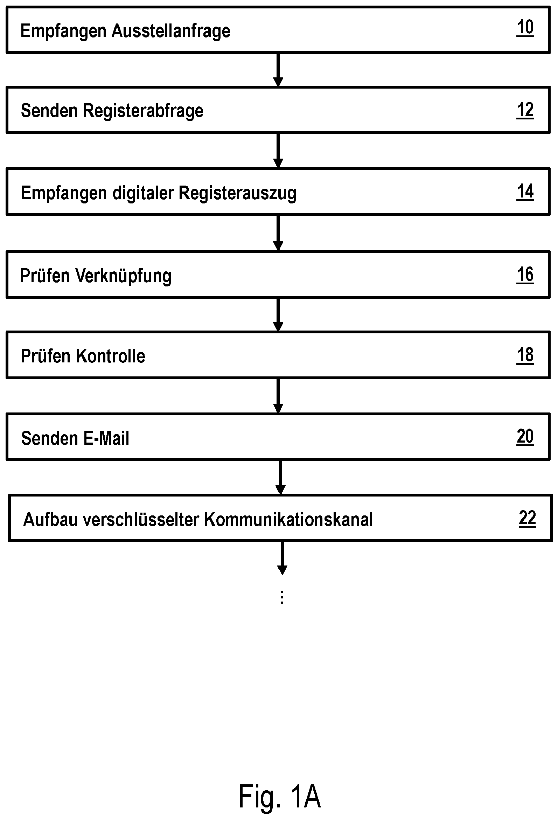

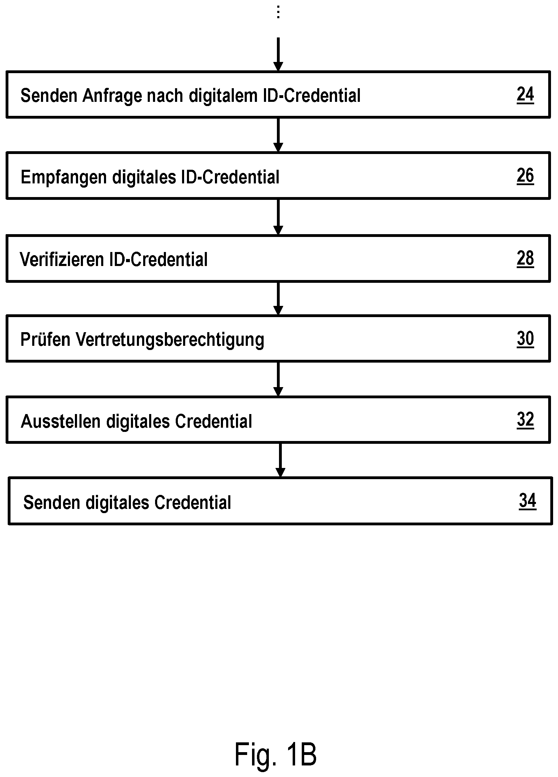

Figur 1, welche aus den Figuren 1A und 1B besteht, zeigt ein exemplarisches Verfahren zum Ausstellen eines digitalen Credentials für eine Entität durch ein Ausstellercomputersystem. In Block 10 empfängt das ein Ausstellercomputersystem eine Ausstellanfrage zum Ausstellen des digitalen Credentials über ein Netzwerk von einem anfragenden Computersystem. Beispielsweise handelt es sich bei der Ausstellanfrage um ein Onlineformular, welches von einem Vertreter der verifizierenden Entität ausgefüllt und an das Ausstellercomputersystem gesendet wird. Der Vertreter der verifizierenden Entität verwendet hierzu beispielsweise einen Browser oder eine eigenständige Applikation auf seinem Computersystem, welche zum Anfragen von digitalen Credentials konfiguriert ist. Die Ausstellanfrage umfasst eine der anfragenden Entität zugeordnete Domain, eine E-Mail-Adresse eines offiziellen Vertreters der Entität und einen Decentralized Identifier. Beispielsweise umfasst die Ausstellanfrage zusätzliche eine register-ID eines Registereintrags der Entität in einem Register, wie etwa einem Handelsregister. In Block 12 sendet das Ausstellercomputersystem eine Registerabfrage nach einem Registereintrag der Entität als Existenznachweis der Entität über das Netzwerk an ein Registercomputersystem. Beispielsweise identifiziert das Ausstellercomputersystem in der Registerabfrage den entsprechenden Registereintrag mittels der Register-ID. Beispielsweise umfasst die Registerabfrage eine Suchanfrage, etwa nach einem Namen, unter welche, die Entität firmiert, um den Registereintrag zu identifizieren. In Block 14 empfängt das Ausstellercomputersystem einen digitalen Registerauszugs der Entität als Existenznachweis über das Netzwerk von dem Registercomputersystem. In Block 16 prüft das Ausstellercomputersystem eine Verknüpfung zwischen der Domain und dem Decentralized Identifier. Hierzu prüft das Ausstellercomputersystem beispielsweise, ob unter der Domain eine Referenz auf den Decentralized Identifier hinterlegt ist. Beispielsweise wird von dem Ausstellercomputersystem ein Decentralized Identifier Dokument des Decentralized Identifier aufgerufen und daraufhin geprüft, ob es eine Referenz auf die Domain umfasst. In Block 18 prüft das das Ausstellercomputersystem optional eine Kontrolle des anfragenden Computersystems über die Domain. Dieses Prüfen der Kontrolle erfolgt beispielsweise unter Verwendung eines Challenge-Response-Verfahrens. Das Ausstellercomputersystem sendet eine Challenge zur Veröffentlichung in der Domain über das Netzwerk an das anfragende Computersystem und prüft die Response in Form der Veröffentlichung in der Domain. Falls die Challenge, etwa ein Zufallswert, in der Domain veröffentlicht wird, stellt dies einen erfolgreichen Nachweis der Kontrolle des anfragenden Computersystems über die Domain dar. Wird die Challenge nicht in der angefragten veröffentlicht, ist das Challenge-Response-Verfahren, d.h. das anfragende Computersystem besitzt keine Kontrolle über die Domain. In Block 20 sendet das Ausstellercomputersystem eine E-Mail mit einer Anfrage zum Aufbau eines verschlüsselten Kommunikationskanals an die E-Mail-Adresse des offiziellen Vertreters der Entität. Beispielsweise umfasst die E-Mail die Einladung in Form eines maschinenlesbaren optischen Codes, etwa eines QR-Codes. In Block wird in Antwort auf das Senden der E-Mail ein verschlüsselter Kommunikationskanals zwischen dem Ausstellercomputersystem und einer ID-Wallet des offiziellen Vertreters der Entität über das Netzwerk aufgebaut. Bei dem verschlüsselten Kommunikationskanal handelt es sich beispielsweise um einen DIDComm-Kanal.

In Block 24 sendet das Ausstellercomputersystem eine Anfrage nach einem digitalen ID-Credential des offiziellen Vertreters der Entität mit personenbezogenen Attributen des Vertreters über den verschlüsselten Kommunikationskanal. In Block 26 empfängt das Ausstellercomputersystem, in Antwort auf das Senden der Anfrage, das digitale ID-Credential über den verschlüsselten Kommunikationskanal, dessen Authentizität das Ausstellercomputersystem in Block 28 verifiziert. In Block 30 prüft das Ausstellercomputersystem die Vertretungsberechtigung des offiziellen Vertreters der Entität unter Verwendung der personenbezogenen Attribute des verifizierten digitalen ID-Credential und des digitalen Registerauszugs der Entität. Stimmen die in dem verifizierten digitalen ID-Credential genannten personenbezogenen Attribute mit personenbezogenen Attributen eines in dem digitalen Registerauszug genannten Vertreters überein, handelt es sich bei dem offiziellen Vertreter, dessen E-Mal-Adresse in der Ausstellanfrage genannt wurde, tatsächlich um einen vertretungsberechtigten Vertreter.

In Block 32 stellt das Ausstellercomputersystem, auf eine erfolgreiche Prüfung der Vertretungsberechtigung hin, das digitalen Credential mit entitätsbezogenen Attributen unter Verwendung des digitalen Registerauszugs aus. Beispielsweise werden die in das digitalen Credential aufgenommenen entitätsbezogenen Attributen vollständig oder teilweise dem digitalen Registerauszug entnommen. Beispielsweise umfassen die aufgenommenen entitätsbezogenen Attribute zusätzlich zu den dem digitalen Registerauszug entnommen entitätsbezogenen Attribute eine Angabe der Domain der Entität. In Block 34 wird das Ausstellercomputersystem des digitalen Credentials in Antwort auf die empfangen Ausstellanfrage über das Netzwerk an das anfragende Computersystem gesendet.

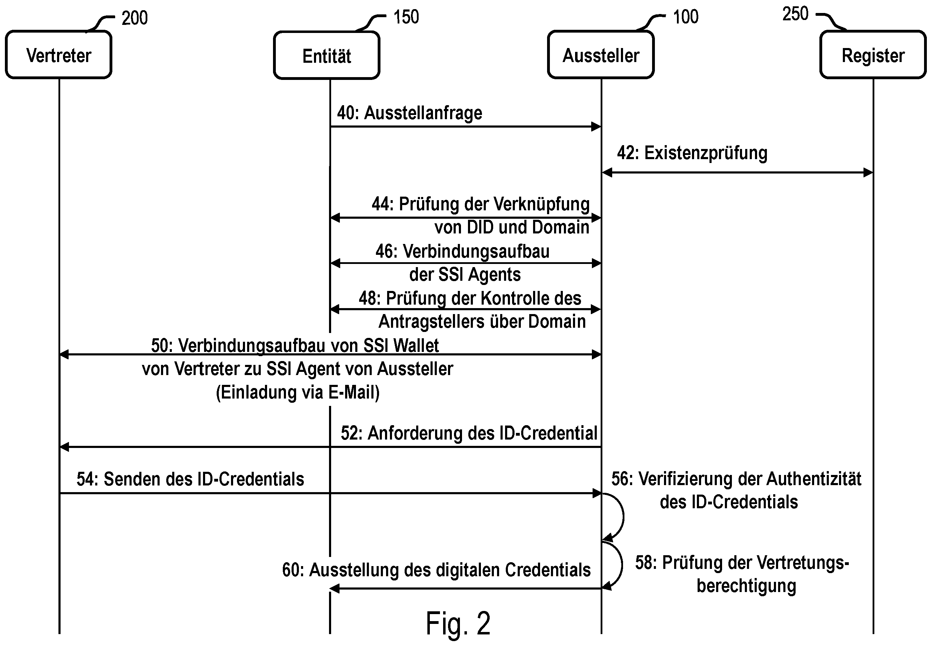

Figur 2 zeigt ein exemplarisches Verfahren zum Ausstellen eines digitalen Credentials für eine Entität. Das Verfahren zum Ausstellen des digitalen Credentials für eine Entität wird in Schritt 40 beispielsweise durch den Empfang einer entsprechenden Ausstellanfrage eines anfragenden Computersystems 150 der Entität durch ein Ausstellercomputersystem 100 eines Ausstellerdienstes initiiert. Beispielsweise handelt es sich bei der entsprechenden Ausstellanfrage um ein digitales Antragsformular, etwa ein Onlineformular, welches von einem Vertreter einer zu verifizierenden Entität ausgefüllt und an das Ausstellercomputersystem 100 gesendet wird. Beispielsweise füllt ein Systemadministrator der zu verifizierenden Entität als Vertreter das Antragsformular aus. Bei dem hierfür verwendeten Computersystem 150 handelt es sich beispielsweise um ein Computersystem der Entität.

Zum Verifizieren der Entität umfasst die Ausstellanfrage eine der anfragenden Entität zugeordnete Domain. Bei einer solche Domain handelt es sich um einen allgemein nach Außen sichtbaren digitalen Auftritt der Entität im Internet. Die Ausstellanfrage umfasst ferner eine E-Mail-Adresse eines offiziellen Vertreters der Entität. Bei einem offiziellen Vertreter der Entität handelt es sich um eine natürliche Person, welche der Entität als handlungsbevollmächtigter Vertreter offiziell zugeordnet ist. Eine entsprechende Zuordnung ist in einem Register, wie etwa einem Handelsregister, eingetragen. Ein entsprechender Registereintrag der Entität kann beispielsweise ferner entitätsbezogene Attribute umfassen. Bei diesen entitätsbezogenen Attributen handelt es sich beispielsweise um einen Namen unter welchem die Entität firmiert, eine Anschrift der Entität, eine Angabe der Rechtsform der Entität, eine Register-ID der Entität, Angaben zu Namen, Ort des Registers und/oder einem für das Register zuständigen Gericht, ein Gründungsdatum der Entität. Ferner umfasst die Ausstellanfrage einen Decentralized Identifier (DID).

Beispielsweise kann die Ausstellanfrage ferner die Register-ID der Entität umfassen. Anhand der Register-ID kann das Ausstellcomputersystem 100 beispielsweise einen Eintrag der Entität in dem Register identifizieren. Alternativerweise kann das Ausstellcomputersystem 100 die Registerabfrage unter Verwendung des Namens der Entität ausführen, um zu prüfen, ob eine Entität mit dem entsprechenden Namen in dem Register eingetragen ist. Ferner kann anhand des Namens beispielsweise der Eintrag der Entität in dem Register identifiziert werden.

Anhand der Angaben der Ausstellanfrage kann das Ausstellcomputersystem 100 in Schritt 42 verifizieren, ob die Entität, für welche das digitale Credential angefragt wird, existiert. Hierzu sendet das Ausstellcomputersystem 100 eine entsprechende Registerabfrage an ein Registercomputersystem 250, welches das abzufragende Register in digitaler Form bereitstellt. Ferner kann das Ausstellercomputersystem 100 in Schritt 44 verifizieren, ob der angegebene Decentralized Identifier der Domain der Entität zugeordnet ist, d.h. ob es sich bei dem angegebenen Decentralized Identifier tatsächlich um einen DID der Entität handelt. Somit kann das Ausstellercomputersystem sichergehen, dass bei einem Aufbau eines verschlüsselten Kommunikationskanals in Schritt 46 mit dem anfragenden Computersystem 150 der Entität unter Verwendung der DID, etwa einem DIDComm-Kanal, der entsprechende Kommunikationskanal tatsächlich mit dem SSI-Agenten der Entität, deren Domain in der Ausstellanfrage angegeben ist, aufgebaut wird. Dieser verschlüsselte Kommunikationskanal zwischen Ausstellercomputersystem 100 und dem anfragenden Computersystem 150 der Entität kann in Schritt 48 zur Prüfung verwendet werden, ob das anfragende Computersystem 150 tatsächliche Kontrolle über die angegebene Domain besitzt. Beispielsweise wird der verschlüsselte Kommunikationskanal zum Ausführen eines Challenge-Response-Verfahrens zwischen Ausstellercomputersystem 100 und anfragendem Computersystem 150 der Entität verwendet werden. Das Challenge-Response-Verfahren dient der Prüfung, ob das anfragende Computersystem tatsächliche Kontrolle über die in der Ausstellanfrage angegebene Domain besitzt. Somit kann sichergestellt werden, dass es sich bei dem anfragenden Computersystem 150 tatsächlich um ein Computersystem der Entität handelt, deren Domain angegeben wurde. Schließlich kann die E-Mail-Adresse des offiziellen Vertreters in Schritt 50 zum Aufbau einer verschlüsselten Kommunikationsverbindung mit einem Computersystem 200 des entsprechenden Vertreters bzw. einer ID-Wallet auf einem entsprechenden Computersystem 200 verwendet werden. Unter Verwendung von personenbezogenen Attributen aus der ID-Wallet kann sich der offizielle Vertreter in Schritt 54 auf eine entsprechende Anfrage des Ausstellercomputersystems 100 in Schritt 52 gegenüber dem Ausstellercomputersystem 100 authentisieren. In Schritt 56 wird die Authentizität des ID-Credentials bzw. der von dem ID-Credential umfassten personenbezogenen Attribute des offiziellen Vertreters verifiziert. Anhand der verifizierten personenbezogenen Attribute kann das Ausstellercomputersystem 100 den offiziellen Vertreter der Entität unter Verwendung der Registerauszugs in Schritt 58 authentifizieren. Eine erfolgreiche Authentifizierung weist die Vertretungsberechtigung des offiziellen Vertreters nach, dessen E-Mai-Adresse in der Ausstellanfrage verwendet wurde. Durch die erfolgreiche Authentisierung zeigt der offizielle Vertreter der Entität beispielsweise ferner seien Zustimmung zu dem Ausstellen des digitalen Credentials an. Auf einen erfolgreichen Nachweis der Vertretungsberechtigung hin wird in Schritt 60 das angefragte digitale Credential der Entität mit entitätsbezogenen Attributen von dem Ausstellercomputersystem 100 unter Verwendung des digitalen Registerauszugs ausgestellt und über das Netzwerk an das anfragende Computersystem 150 gesendet. Die Ausstellung kann beispielsweise an den SSI-Agenten der Entität erfolgen, welcher beispielsweise auch eine ID-Wallet zum Speichern des ausgestellten digitalen Credentials umfassen kann.

Zum Prüfen der Existenz der Entität, für welche das digitale Credential angefragt wird, sendet das Ausstellercomputersystem 100 in Schritt 42 einer Registerabfrage nach einem Registereintrag als Existenznachweis der Entität über das Netzwerk an ein Registercomputersystem 250. Beispielsweise baut das Ausstellercomputersystem 100 hierzu über das Netzwerk einen verschlüsselten Kommunikationskanal mit einem Registercomputersystem250 des entsprechenden Registers auf. Die Registerabfrage wird beispielsweise über diesen verschlüsselten Kommunikationskanal gesendet. In Antwort auf das Senden der Registerabfrage, empfängt das Ausstellercomputersystem 100 einen digitalen Registerauszugs der Entität als Existenznachweis. Der Registerauszug wird beispielsweise über den verschlüsselten Kommunikationskanal von dem Registercomputersystem 250 empfangen. Durch einen gültigen digitalen Registerauszug der Entität, etwa einen digitalen Handelsregisterauszug, kann deren Existenz digital geprüft werden.

Ferner wird in Schritt 44 eine Verknüpfung zwischen der angegebenen Domain und dem abgegeben Decentralized Identifier geprüft. Durch eine solche Prüfung kann sichergestellt werden, dass es sich bei dem angegebenen Decentralized Identifier tatsächlich um einen Decentralized Identifier derjenigen Entität handelt, deren Domain in der Ausstellanfrage angegeben wurde.

Beispielsweise stellt die Entität unter Verwendung der Well Known DID Configuration (s. https://identity.foundation/.well-known/resources/did-configuration/) einen Nachweis bereit, über den die Verknüpfung der angegebenen DID mit der in der Ausstellanfrage übermittelten Domain geprüft werden kann. Die Prüfung erfolgt durch das Ausstellecomputersystem 100 beispielsweise automatisch. Ist die Prüfung erfolgreich, wird beispielsweise einem SSI-Agent der Entität eine Einladung des Ausstellercomputersystems 100 zum Aufbau einer verschlüsselten Kommunikationskanals, beispielsweise eines DIDComm-Kanals, zugesendet. Diese Einladung wird seitens der Entität akzeptiert. Beispielsweise erhält der Systemadministrator der Entität über eine Verwaltungsnutzerschnittstelle (Management User Interface/Management UI) des SSI-Agents der Entität auf dem anfragenden Computersystem 150 eine Benachrichtigung über die Einladung des Ausstellercomputersystems 100 zum Aufbau des verschlüsselten Kommunikationskanals. Diese Einladung bzw. Verbindungsanfrage kann dann beispielsweise von dem Systemadministrator der Entität akzeptiert werden, damit der verschlüsselte Verbindungkanal aufgebaut wird.

Ferner kann von dem Ausstellercomputersystem 100 in Schritt 48 beispielsweise eine Kontrolle des angegeben Decentralized Identifier über die angegebene Domain geprüft werden. Nach einem erfolgreichen Aufbau des verschlüsselten Kommunikationskanals zwischen dem Ausstellercomputersystem 100 und dem anfragenden Computersystem 150 unter Verwendung des Decentralized Identifier kann das Ausstellercomputersystem 100 beispielsweise über eines der zuvor beschriebenen Verfahren prüfen, ob der Antragsteller die übermittelte Domain kontrolliert.

Anschließend sendet das Ausstellercomputersystem 100 in Schritt 50 die E-Mail mit der Einladung zum Aufbau eines verschlüsselten Kommunikationskanals an die E-Mail-Adresse des offiziellen Vertreters der Entität, welche in der Ausstellanfrage an das Ausstellercomputersystem 100 übermittelt wurde. Der offizielle Vertreter kann die E-Mail an einem Vertretercomputersystem aufrufen und dem Aufbau zustimmen. In Antwort auf das Senden der E-Mail, wird der verschlüsselte Kommunikationskanal zwischen dem Ausstellercomputersystem 100 und einer ID-Wallet des offiziellen Vertreters der Entität über das Netzwerk aufgebaut. Beispielsweise handelt es sich bei dem verschlüsselte Kommunikationskanal um einen DIDComm-Kanal. Das Ausstellercomputersystem 100 sendet die Einladung beispielsweise in Form eines maschinenlesbaren optischen Codes, etwa eines QR-Codes, an die entsprechende E-Mail-Adresse. Der Empfänger der E-Mail, d.h. der offizielle Vertreter der Entität, scannt beispielsweise den maschinenlesbaren optischen Code unter Verwendung seiner ID-Wallet, etwa einer SSI-Wallet, und baut dadurch den verschlüsselten Kommunikationskanal auf. Die ID-Wallet des offiziellen Vertreters der Entität wird beispielsweise auf einem Computersystem 200 des entsprechenden Vertreters bereitgestellt. Beispielsweise wird der verschlüsselte Kommunikationskanal zu einem SSI-Agent des Ausstellercomputersystems 100 aufgebaut.

Über den verschlüsselten Kommunikationskanal sendet das Ausstellercomputersystem 100 in Schritt 52 eine Anfrage nach einem digitalen ID-Credential an den offiziellen Vertreter der Entität bzw. dessen Vertretercomputersystem 200. Das digitale ID-Credential umfasst personenbezogene Attribute des Vertreters anhand derer der Vertreter durch das Ausstellercomputersystem 100 authentifiziert werden kann. In Antwort auf das Senden der Anfrage, empfängt das Ausstellercomputersystem 100 in Schritt 54 das digitale ID-Credential des offiziellen Vertreters der Entität von dem Vertretercomputersystem 200. In Schritt 56 wird die Authentizität des empfangenen digitalen ID-Credentials durch das Ausstellercomputersystem 100 verifiziert. Beispielsweise ist das digitale ID-Credential bzw. sind die von dem digitalen ID-Credential umfassten personenbezogene Attribute signiert. Beispielsweise prüft das Ausstellercomputersystem100 zum Verifizieren der Authentizität die entsprechende Signatur mit einem Signaturprüfschlüssel. Die personenbezogenen Attribute des verifizierten digitalen ID-Credential werden dann in Schritt 58 zur Authentifizierung des offiziellen Vertreters der Entität durch das Ausstellercomputersystem 100 beispielsweise auf eine Übereinstimmung mit personengebogenen Attributen von offiziellen Vertretern der Entität geprüft, welche gemäß digitalem Registerauszug in dem Registereintrag der Entität eingetragen sind. Auf eine Übereinstimmung der personenbezogenen Attribute des verifizierten digitalen ID-Credential mit personenbezogenen Attributen eines in dem digitalen Registerauszug angeführten offiziellen Vertreter der Entität gilt der offizielle Vertreter, dessen E-Mail-Adresse in der Ausstellanfrage angegeben wurde, als erfolgreich authentifiziert und als für die Entität tatsächlich vertretungsberechtigt.

Beispielsweise fordert das Ausstellercomputersystem 100 in Schritt 52, auf den erfolgreichen Aufbau des verschlüsselten Kommunikationskanals hin, den offiziellen Vertreter der Entität zu einem Identitätsnachweis in Form des ID-Credentials auf. Beispielsweise verwendet der offiziellen Vertreter zum Bereitstellen des ID-Credentials eine digitale Basis ID, d.h. ein digitales Basis ID-Credential, oder der offiziellen Vertreter sendet das digitale Basis ID-Credential als ID-Credential an das Ausstellercomputersystem 100. Beispielsweise erhält der offizielle Vertreter die Anfrage nach dem digitalen ID-Credential in seinem ID-Wallet und bestätigt diese. Das digitale ID-Credential mit den angeforderten personenbezogenen Attributen wird dann in Schritt 54, beispielsweise mit einem Nachweis der Authentizität des digitalen ID-Credential und/oder einer zum Bereitstellen des digitale ID-Credential verwendete digitale Basis ID, an das Ausstellercomputersystem 100 übermittelt. Beispielsweise erfolgt die Übermittlung an den SSI-Agenten des Ausstellercomputersystem 100. Das Ausstellercomputersystem 100 überprüft in Schritt 56 den Nachweis der Authentizität und führt in Schritt 58 einen Abgleich der übermittelten personenbezogenen Attribute mit dem digitalen Registerauszug, beispielsweise einem digitalen Handelsregisterauszug, durch. Die Überprüfung ist beispielsweise erfolgreich, wenn die personenbezogenen Attribute in einer von dem digitalen Registerauszug umfassten Liste der für die Entität vertretungsberechtigten Personen wiederzufinden sind. Beispielsweise kann der Identitätsnachweis in Form eines ID-Credentials auf der eID-Funktion des elektronischen Personalausweises in Form der Online-Ausweisfunktion beruhen.

Auf die erfolgreiche Prüfung der Vertretungsberechtigung in Schritt 58 hin, stellt das Ausstellercomputersystem 100 in Schritt 60 das angefragte digitale Credential mit entitätsbezogenen Attributen unter Verwendung des digitalen Registerauszugs aus. Beispielsweise werden die entitätsbezogenen Attribute aus dem digitalen Registerauszug entnommen. Das resultierende digitale Credential wird von dem Ausstellercomputersystem 100 in Antwort auf die empfangen Ausstellanfrage über das Netzwerk an das anfragende Computersystem 150 gesendet. Die Ausstellung kann beispielsweise an den SSI-Agenten der Entität erfolgen, welcher beispielsweise auch eine ID-Wallet zum Speichern des ausgestellten digitalen Credentials umfassen kann. Das ausgestellte digitale Credential dient beispielsweise als Initial Trust Credential der Entität.

Beispielsweise stellt das Ausstellercomputersystem 100 der Entität das digitale Credential in Schritt 60 nach einer erfolgreichen Überprüfung der Identität des offiziellen Veteres der Entität in Schritt 58 aus, dessen E-Mail-Adresse in der Ausstellanfrage angegeben wurde. Beispielsweise sendet das Ausstellercomputersystem 100 nach erfolgreichem Abschluss der Überprüfungen ein Angebot zum Ausstellen des digitalen Credentials an das anfragende Computersystem 150. Beispielsweise muss das anfragende Computersystem 100, z.B. ein das anfragende Computersystem 150 nutzender Systemadministrator der Entität, als Voraussetzung für das Ausstellen des digitalen Credentials durch das Ausstellercomputersystem 100 das Angebot akzeptieren. Das resultierende digitale Credential der Entität wird beispielsweise von dem SSI-Agent der Entität gespeichert und kann dazu verwendet werden, beispielsweise in einem SSI-Kontext gegenüber Dritten die Identität der Entität nachzuweisen. Ein solcher Nachweis kann von der Entität bzw. einem Computersystem der Entität beispielsweise sowohl im B2C-, als auch im B2B-Kontext verwendet werden.

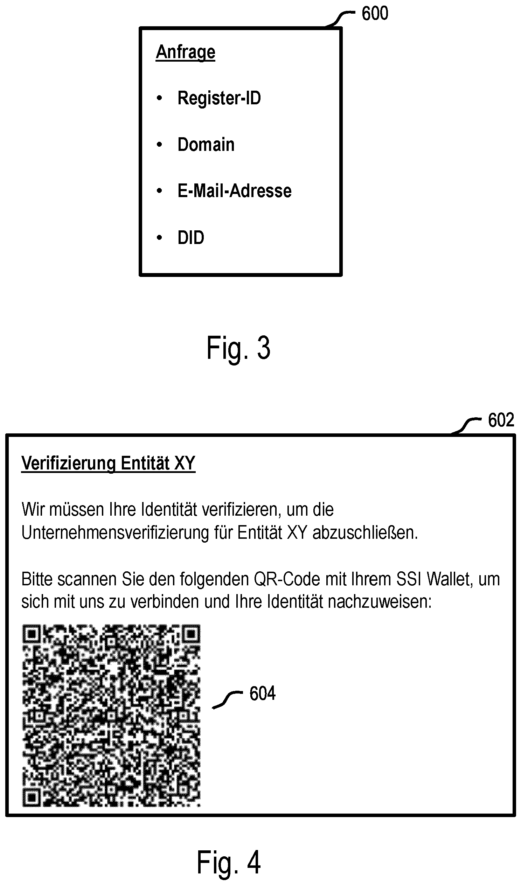

Figur 3 zeigt eine exemplarische Ausstellanfrage 600, etwa in Form eines Onlineformulars, welches das anfragende Computersystem ausfüllt. Die Ausstellanfrage 600 umfasst eine der anfragenden Entität zugeordnete Register-ID, welche einen Registereintrag der Entität in einem Register identifiziert, eine der anfragenden Entität zugeordnete Domain, eine E-Mail-Adresse eines offiziellen Vertreters der Entität und einen Decentralized Identifier, d.h. DID, der Entität.

Figur 4 zeigt ein E-Mail 602 eines Ausstellercomputersystems mit einer Einladung 604 zum Aufbau eines verschlüsselten Kommunikationskanals zwischen dem Ausstellercomputersystem und einem Computersystem des offiziellen Vertreters der Entität, an dessen E-Mail-Adresse die E-Mail 602 gesendet wird. Die E-Mail 602 die Einladung 604 zum Aufbau des verschlüsselten Kommunikationskanals, etwa eines DIDComm-Kanals, in Form eines maschinenlesbaren optischen Codes, beispielsweise eines QR-Codes. Zum Aufbau des verschlüsselten Kommunikationskanals kann der offiziellen Vertreter der Entität den maschinenlesbaren optischen Code beispielsweise mit seiner ID-Wallet scannen.

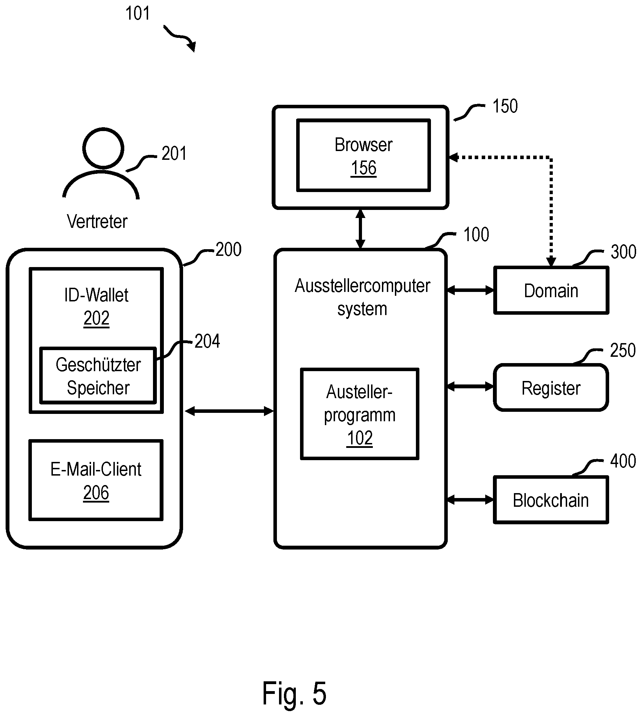

Figur 5 zeigt ein exemplarisches System 101, welches konfiguriert ist zum Bereitstellen digitaler verifizierbarer Credentials für Entitäten durch ein Ausstellercomputersystem 100. Die digitaler verifizierbarer Credentials umfassen entitätsbezogene Attribute aus Registern, wie dem von Registercomputersystem 250 bereitgestellten Register. Das Ausstellercomputersystem 100 umfasst ein Ausstellerprogramm 302 zum Ausstellen digitaler verifizierbarer Credentials für Entitäten. Zudem verfügt das System 101 über eine Blockchain 400 einer SSI-Infrastruktur, in welcher digitale verifizierbare Credentials sowie öffentliche kryptografische Schlüssel der SSI-Infrastruktur hinterlegt sind, welche Ausstellern verifizierbarer Credentials zugeordnet sind. Das System 101 umfasst zudem ein anfragendes Computersystem 150 einer Entität, durch welches eine Ausstellanfrage zum Ausstellen eines digitalen Credentials für die Entität an das Ausstellercomputersystem 100 gestellt werden kann. Beispielsweise handelt es sich bei der Ausstellanfrage um ein Onlineformular, welches unter Verwendung eines Browsers 156 ausgefüllt wird. Zudem umfasst das System 101 einen Domain-Server 300, welcher die Inhalte einer Domain der Entität zum Abrufen, etwa über das Internet, bereitstellt. Schließlich umfasst das System 101 ein Vertretercomputersystem 200 mit einem E-Mail-Client 206 empfang einer E-Mail mit einer Einladung zum Aufbau eines verschlüsselten Kommunikationskanals zwischen dem Ausstellercomputersystem 100 und dem Vertretercomputersystem 200. Ferner umfasst das Vertretercomputersystem 200 eine ID-Wallet 202 mit einem geschützten Speicherbereich 204, in welchem ID-Credentials und/oder verifizierbaren personenbezogene Attribute des Vertreters 201 der Entität gespeichert sind. Diese ID-Credentials und/oder verifizierbaren personenbezogene Attribute verwendet der Vertreter 201 zum Authentisieren gegenüber dem Ausstellercomputersystem 100. Hierzu sendet das Vertretercomputersystem 200 ein ID-Credential, welches beispielsweise in dem geschützten Speicherbereich 204 gespeichert ist oder welches beispielsweise aus den in dem geschützten Speicherbereich 204 gespeicherten ID-Credentials und/oder verifizierbaren personenbezogene Attribute abgeleitet ist, an das Ausstellercomputersystem 100. Das Ausstellercomputersystem 100 verifiziert die Authentizität des empfangenen ID-Credentials und prüft die Vertretungsberechtigung des Vertreters 201 anhand eines Abgleichs der von diesem umfassten personenbezogenen Attribute verwendet des offiziellen Vertreters 201 der Entität mit personenbezogenen Attributen von Vertreter der Entität, welche in einem digitalen Registerauszug genannt werden. Wurden alle in der Ausstellanfrage bereitgestellten Daten erfolgreich auf ihre Validität sowie ihre Zuordnung zu der genannten Entität geprüft, stellt das Ausstellercomputersystem unter Verwendung des Ausstellprogramm 102 ein digitales Credential für die anfragende Entität aus.

Bei dem Dienst zum Ausstellen digitaler verifizierbarer Credentials für Entitäten, welche das Ausstellercomputersystem 100 ausstellt, handelt es sich beispielsweise um einen Ausstellerdienst einer SSI-Infrastruktur. Die von dem Ausstellerdienst verwendete SSI-Infrastruktur umfasst beispielsweise die Blockchain 400. Die Blockchain 400 stellt beispielsweise Datenschemata zum Ausstellen digitaler verifizierbarer Credentials bereit. Diese Datenschemata beschreiben den strukturellen Aufbau der entsprechend digitaler verifizierbarer Credentials. Ferner sind in der Blockchain 400 öffentliche kryptografische Schlüssel von Ausstellern der SSI-Infrastruktur hinterlegt. Somit ermöglicht es die Blockchain 400, bei welcher es sich beispielsweise um eine öffentliche genehmigungspflichtige Blockchain handelt, bei welcher Schreibzugriffe beschränkt sind, während Lesezugriffe für jeden möglich sind. Somit ermöglicht es die Blockchain 400, ein digitales verifizierbares Credential zu verifizieren. Hierzu erfolgt beispielsweise ein Lesezugriff auf die Blockchain 400 und das für das entsprechende Credential hinterlegte Datenschema sowie der öffentliche kryptografische Schlüssel des Ausstellers des zu verifizierenden Credentials ausgelesen. Unter Verwendung des entsprechenden Datenschemas kann geprüft werden, ob das vorliegende digitale verifizierbare Credential die hinterlegte Struktur aufweist sowie alle für eine erfolgreiche Verifizierung notwendigen Datentypen umfasst. Beispielsweise umfassen die für eine Verifizierung notwendigen Datentypen bestimmte Typen von entitätsbezogenen Attributen, welche beispielsweise in dem Registereintrag der Entität hinterlegt sind. Ferner kann der hinterlegte öffentliche kryptografische Schlüssel des Ausstellers dazu verwendet werden, die Signatur des digitalen verifizierbaren Credentials zu prüfen.

Darüber hinaus können in der Blockchain 400 beispielsweise Revozierungshinweise hinterlegt werden, welche über eine Revozierung eines ausgestellten digitalen verifizierbaren Credentials informieren. Im Zuge eines Verifizierens eines vorliegenden digitalen verifizierbaren Credentials kann unter Verwendung der Blockchain 400 geprüft werden, ob für das entsprechende Credential ein Revozierungseintrag in der Blockchain hinterlegt ist. Ist in der Blockchain ein Revozierungseintrag hinterlegt, d. h. ist das entsprechende Credential revoziert, so fällt das Ergebnis einer Verifizierung des entsprechenden Credentials negativ aus. Schließlich können in der Blockchain 400 Parameter hinterlegt sein zum Authentifizieren von Kommunikationsteilnehmern. Beispielsweise können basierend auf den entsprechenden Authentifizierungsinformationen die ID-Wallet 202 und das Ausstellerprogramm 102 im Zuge des Aufbaus des verschlüsselten Kommunikationskanals authentifiziert werden.

Ist das verifizierbare Credential der Entität ausgestellt und sicher, etwa in einer ID-Wallet 102 der Entität, abgespeichert, kann die Entität bzw. deren Computersystem 150 das entsprechende digitale Credential zum Authentisieren bzw. Identifizieren verwenden. Hierfür reicht beispielsweise das digitale Credential aus. Mit dem digitale Credential kann sich die Entität gegenüber beliebigen anderen Entitäten ausweisen. Dies funktioniert insbesondere digital, indem die Entität, falls dies notwendig ist, ein passendes digitales verifizierbares Credential, etwa aus der ID-Wallet auswählt, und der anderen Entität zusendet. Die empfangene Entität, d. h. ein Prüfer, kann das empfangene digitale verifizierbare Credential beispielsweise unter Verwendung der Blockchain 400 verifizieren. Hierzu prüft der Prüfer beispielsweise in der oben beschriebenen Art und Weise unter Verwendung der in der Blockchain 400 enthaltenen Informationen, wie etwa dem Datenschema, dem öffentlichen kryptografischen Schlüssel und/oder Hinweisen, ob das vorgelegte digitale verifizierbare Credential valide ist. Ist die Verifizierung erfolgreich, so wird das digitale verifizierbare Credential als authentisch anerkannt und die zugehörige Entität gilt als authentifiziert basierend auf den von den digitalen verifizierbaren Credentials bereitgestellten entitätsbezogenen Attributen.

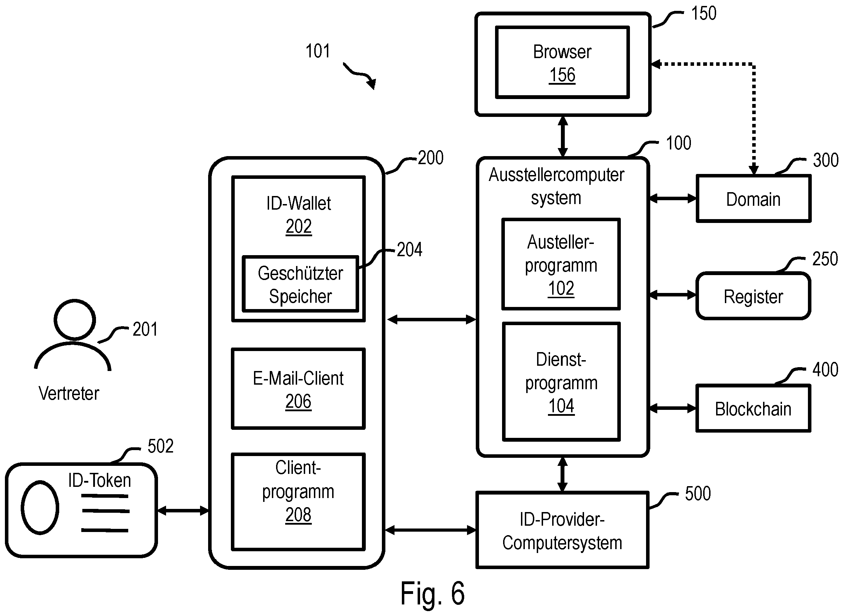

Figur 6 zeigt ein weiteres exemplarisches System 101, welches konfiguriert ist zum Bereitstellen digitaler verifizierbarer Credentials für Entitäten durch ein Ausstellercomputersystem 100. Zusätzlich zu den Komponenten des in Figur 5 gezeigten System 101 umfasst das System 101 der Figur 6 ferner ein ID-Provider-Computersystem 500 zum Auslesen von personenbezogenen Attributen des offiziellen Vertreters 201 der Entität aus einem ID-Token 502. Diese personenbezogenen Attribute werden dem Ausstellercomputersystem 100 als ID-Credentials zum Authentifizieren des Vertreters 201 und Prüfen von dessen Vertretungsberechtigung zur Verfügung gestellt. Das Ausstellercomputersystem 100 verwendet den ID-Provider-Computersystem 500 zum Auslesen von personenbezogenen Attributen aus dem ID-Token 502. Zu diesem Zweck umfasst das ID-Provider-Computersystem 500 beispielsweise über Berechtigungsnachweise, welches es ihm ermöglichen, personenbezogenen Attribute aus dem ID-Token 502 auszulesen. Das Ausstellercomputersystem 100 fragt die ausgelesenen personenbezogenen Attribute beispielsweise unter Verwendung des Dienstprogramms 104 von dem ID-Provider-Computersystem 500 an. Das Auslesen von personenbezogenen Attributen aus dem ID-Token 502 erfolgt beispielsweise unter Vermittlung eines auf dem Vertretercomputersystem 200 ausgeführten ID-Client-Programms 208. Das ID-Provider-Computersystem 500 stellt dem Ausstellercomputersystem 500 die personenbezogenen Attribute zur Verfügung. Beispielsweise sind die von dem ID-Provider-Computersystem 500 bereitgestellten personenbezogenen Attribute mit einem Signaturschlüssel des ID-Provider-Computersystem 500 signiert, womit deren Authentizität nachgewiesen wird. Das Ausstellercomputersystem 100 verwendet die ausgelesenen personenbezogenen Attribute des Vertreters 201 zu dessen Überprüfung.

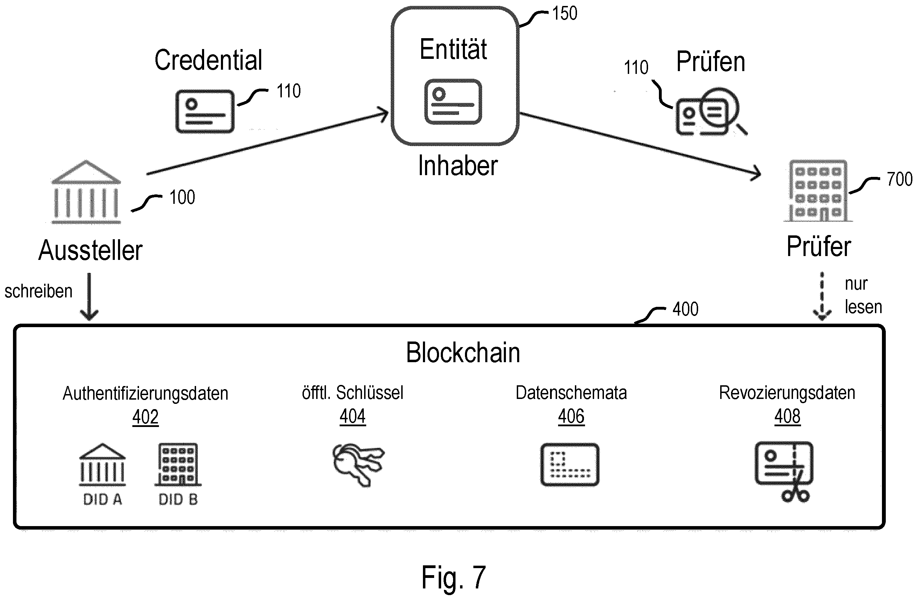

Figur 7 veranschaulicht eine Verwendung eines digitalen verifizierbaren Credentials 110 einer Entität, welche Inhaber des digitalen verifizierbaren Credentials 110 ist. Das digitale verifizierbare Credentials 110 wurde beispielsweise nach einem der Verfahren einer der Figuren 1 oder 2 ausgestellt. Die Entität besitzt ein Computersystem 150, auf welchem das digitale verifizierbare Credential 110, beispielsweise in einer ID-Wallet, sicher abgespeichert ist. Das entsprechende digitale verifizierbare Credential 110 erhält die Entität durch einen Aussteller bzw. ein Ausstellercomputersystem 100. Die Entität kann das so ausgestellte digitale verifizierbare Credential gegenüber einem Prüfer bzw. einem Prüfcomputersystem 700 verwenden. Hierzu sendet die Entität das digitale verifizierbare Credential 110 beispielsweise von dem Computersystem 150 an das Prüfcomputersystem 700 des Prüfers. Dieses prüft das bereitgestellte digitale verifizierbare Credential 110 beispielsweise unter Verwendung einer SSI-Infrastruktur, welche eine Blockchain 400 umfasst. In der Blockchain 400 sind beispielsweise Authentifizierungsinformationen 402 zum Authentifizieren des Ausstellers 100 sowie des Prüfers 700 hinterlegt. Ferner sind in der Blockchain 400 beispielsweise öffentliche kryptografische Schlüssel 404 des Ausstellers 100 hinterlegt, unter deren Verwendung als Signaturprüfschlüssel eine Signatur des digitalen verifizierbaren Credentials 110 geprüft werden kann. Ferner sind in der Blockchain 400 beispielsweise Datenschemata 406 hinterlegt, die Strukturen des digitalen verifizierbaren Credentials 110 definieren. Unter Verwendung des hinterlegten Datenschemas 406 kann geprüft werden, ob das digitale verifizierbare Credential 110 die vorgesehene Datenstruktur aufweist und insbesondere ob das digitale verifizierbare Credential 110 diejenigen entitätsbezogenen Attribute umfasst, welche es umfassen sollte. Ferner können in der Blockchain 400 Revozierungsdaten 408 hinterlegt sein, welche ein Revozieren eines ausgestellten digitalen verifizierbaren Credentials definieren. Beispielsweise kann in der Blockchain 400 eine Angabe hinterlegt sein, wo ein entsprechender Revozierungshinweis eines digitales verifizierbares Credentials hinterlegt ist, oder ein entsprechender Revozierungshinweis selbst kann in der Blockchain 400 hinterlegt sein. Somit kann mittels der Blockchain 400 die Validität eines vorgelegten digitalen verifizierbaren Credentials 110 durch ein Prüfcomputersystem 700 geprüft werden. Fällt die Validitätsprüfung positiv aus und ist das Credential damit verifiziert, werden die von ihm bereitgestellten Daten, insbesondere die entitätsbezogenen Attribute der entsprechenden Entität, von dem Prüfcomputersystem 700 als authentisch akzeptiert. Somit kann die Entität in dieser Weise unter Verwendung des digitalen verifizierbaren Credentials 110 gegenüber dem Prüfcomputersystem 700 authentifizieren und/oder identifizieren. Bei der Blockchain 400 handelt es sich beispielsweise um eine öffentliche genehmigungspflichtige Blockchain, bei der ein Schreibzugriff, etwa durch das Ausstellercomputersystem 100, nur mit einem entsprechenden Berechtigungsnachweis möglich ist, während beispielsweise jeder andere, wie etwa das Prüfcomputersystem 700, die Blockchain 400 mit ihren Einträgen lesen kann.

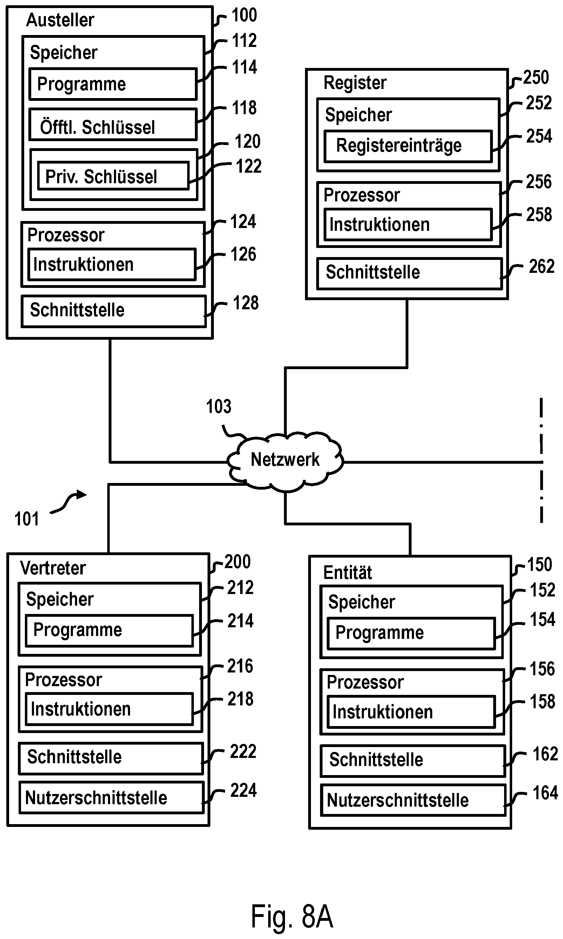

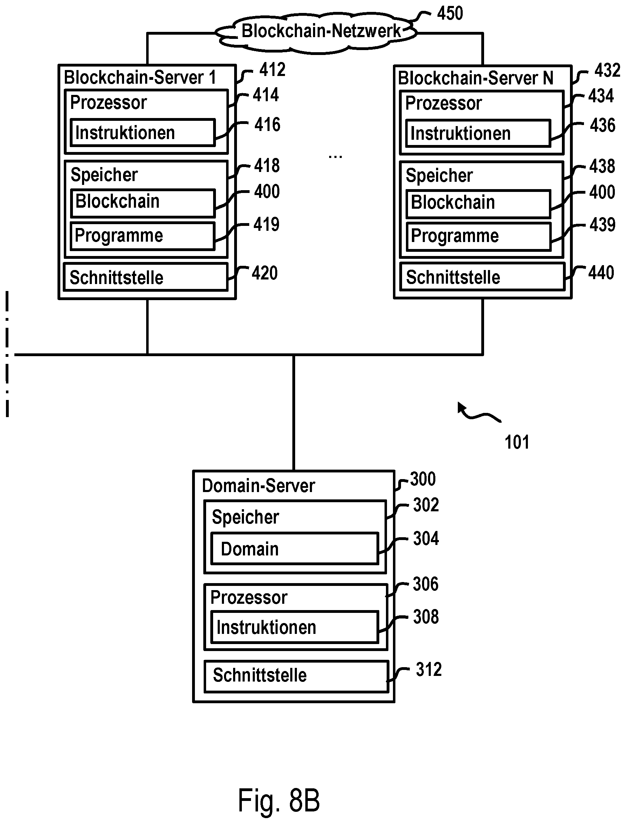

Figur 8, welche aus den Figuren 8A und 8B besteht, zeigt ein exemplarisches System 101 zum Ausstellen und Bereitstellen eines digitalen verifizierbaren Credentials für eine Entität. Basierend auf dem exemplarischen System 101 der Figur 8 kann jedes der exemplarischen Systeme 101 gemäß den Figuren 5 und 6 implementiert werden. Dabei kann das in Figur 8 gezeigt System 101 zum Ausführen jedes der exemplarischen Verfahren der Figuren 1, 2, 9, 10 und 11 verwendet werden. Das in Figur 8 gezeigte exemplarische System 101 umfasst ein Ausstellercomputersystem 100, ein anfragendes Computersystem 150 einer Entität, für welche ein digitales Credential ausgestellt werden soll, ein Computersystem 200 eines offiziellen Vertreters der Entität, ein Registercomputersystem 250, welches ein Register bereitstellt, einen Domain-Server 300, welcher Inhalte einer Domain der Entität bereitstellt, ein Blockchain-Netzwerk 450, welches eine Blockchain 400 bereitstellt, und ein Netzwerk 103.

Das Ausstellercomputersystem 100 ist zum Ausstellen digitaler verifizierbarer Credentials für Entitäten konfiguriert. In einem Speicher 112 des Ausstellercomputersystems 100 sind Programmen 114 gespeichert. Diese Programme umfassen beispielsweise ein Ausstellerprogramm zum Ausstellen der digitalen verifizierbaren Credentials und/oder ein Revozierungsprogramm zum Revozieren ausgestellter digitaler verifizierbarer Credential. In dem Speicher 112 ist ferner ein öffentlicher kryptographischer Schlüssel 118 als Signaturprüfschlüssel des Ausstellercomputersystems 100 gespeichert. Ein zugehöriger privater kryptographischer Schlüssel 122 als Signaturschlüssel des Ausstellercomputersystems 100 zum Signieren von digitalen verifizierbaren Credentials ist beispielsweise in einem geschützten Speicherbereich 120 des Speichers 112 gespeichert. Zudem umfasst das Ausstellercomputersystem 100 einen Prozessor 124, welcher zum Ausführen von Programminstruktionen 126 der Programme 114 konfiguriert ist. Durch ein Ausführen der Programminstruktionen 126 durch den Prozessor 124 wird das Ausstellercomputersystem 100 zum Ausstellen digitaler verifizierbarer Credentials gesteuert. Hierzu umfasst das Ausstellercomputersystem ferner eine Kommunikationsschnittstelle 128 zur Kommunikation über das Netzwerk 103, beispielsweise mit dem anfragenden Computersystem 150 der Entität, dem Computersystem 200 des offiziellen Vertreters der Entität, dem Registercomputersystem 250, dem Domain-Server 300 und/oder dem Blockchain Netzwerk 450.

Das anfragende Computersystem 150 der Entität ist zum Erstellen und Senden einer Ausstellanfrage zum Ausstellen eines digitaler verifizierbarer Credentials für die entsprechender Entität konfiguriert. In einem Speicher 152 des anfragenden Computersystems 150 sind Programmen 154 gespeichert. Diese Programme 154 umfassen beispielsweise einen Browser zum Aufrufen und Ausfüllen einer Ausstellanfrage in Form eines Onlineformulars. Diese Programme 154 ferner beispielsweise ein Programm zum Kontrollieren und Ändern von Inhalten einer Domain der Entität, welche beispielsweise von dem Domain-Server 300 bereitgestellt werden. Zudem umfasst das anfragende Computersystem 150 einen Prozessor 156, welcher zum Ausführen von Programminstruktionen 128 der Programme 154 konfiguriert ist. Durch ein Ausführen der Programminstruktionen 158 durch den Prozessor 156 wird das anfragende Computersystem 150 zum Stellen der Ausstellanfrage gesteuert. Hierzu umfasst das Ausstellercomputersystem ferner eine Kommunikationsschnittstelle 162 zur Kommunikation über das Netzwerk 103, beispielsweise mit dem Ausstellcomputersystem 100, dem Domain-Server 300 und/oder dem Blockchain Netzwerk 450. Ferner umfasst das anfragende Computersystem 150 einen Nutzerschnittstelle 164, welche es einem Nutzer, etwa einem Systemadministrator der Entität, ermöglicht mit dem anfragenden Computersystem 150 zu interagieren und dessen Funktionen zu steuern.

Das Vertretercomputersystem 200 eines offiziellen Vertreters der Entität ist zum Authentisieren des Vertreters gegenüber dem Ausstellercomputersystem 100 konfiguriert. In einem Speicher 212 des Vertretercomputersystem 200 sind Programmen 214 gespeichert. Diese Programme 214 umfassen beispielsweise eine ID-Wallet mit ID-Credentials und/oder verifizierbaren personenbezogenen Attributen des Vertreters, mit welchen sich dieser gegenüber dem Ausstellercomputersystem 100 authentisieren kann. Ferner umfassen diese Programme 214 beispielsweise einen E-Mail-Client zum Empfangen von E-Mails, etwa mit einer Einladung des Ausstellercomputersystem 100 zum Aufbauen eines verschlüsselten Kommunikationskanals. Zudem umfasst das Vertretercomputersystem 200 einen Prozessor 216, welcher zum Ausführen von Programminstruktionen 218 der Programme 214 konfiguriert ist. Durch ein Ausführen der Programminstruktionen 218 durch den Prozessor 214 wird das Vertretercomputersystem 200 beispielsweise zum Aufbau eines verschlüsselten Kommunikationskanals mit dem Ausstellercomputersystem 100 und einem Authentisieren des offiziellen Vertreters der Entität gegenüber dem Ausstellercomputersystem 100 gesteuert. Hierzu umfasst das Vertretercomputersystem 200 ferner eine Kommunikationsschnittstelle 222 zur Kommunikation über das Netzwerk 103, beispielsweise mit dem Ausstellercomputersystem 100. Ferner umfasst das Vertretercomputersystem 200 einen Nutzerschnittstelle 224, welche es dem offiziellen Vertreter der Entität ermöglicht mit dem Vertretercomputersystem 200 zu interagieren und dessen Funktionen zu steuern.

Registercomputersystem 250 ist zum Bereitstellen digitaler Registerauszüge von Registereinträgen eines digitalen Registers, wie etwa einem Handelsregister, konfiguriert. In einem Speicher 252 des Registercomputersystems 250 sind Registereinträge 254 des digitalen Registers gespeichert. Zudem umfasst das Registercomputersystem 250 einen Prozessor 256, welcher zum Ausführen von Programminstruktionen 258 konfiguriert ist. Durch ein Ausführen der Programminstruktionen 258 durch den Prozessor 256 wird das Registercomputersystem 250 zum Bereitstellen digitaler Registerauszüge gesteuert. Hierzu umfasst das Registercomputersystem 250 ferner eine Kommunikationsschnittstelle 262zur Kommunikation über das Netzwerk 103, beispielsweise mit dem Ausstellercomputersystem 100.

Der Domain-Server 300 ist zum Bereitzustellen von einer Domain 304 der Entität konfiguriert. In einem Speicher 302 des Domain-Servers 300 sind beispielsweise die entsprechenden Inhalte der Domain 304 gespeichert. Zudem umfasst der Domain-Server 300 einen Prozessor 306, welcher zum Ausführen von Programminstruktionen 308 konfiguriert ist. Durch ein Ausführen der Programminstruktionen 308 durch den Prozessor 306 wird der Domain-Server 300 zum Bereitstellen der Inhalte der Domain 304 der Entität gesteuert. Hierzu umfasst der Domain-Server 300 ferner eine Kommunikationsschnittstelle 312 zur Kommunikation über das Netzwerk 103, beispielsweise mit dem Ausstellercomputersystem 100 und/oder dem anfragenden Computersystem 150 der Entität.

Schließlich umfasst das System 101 das Blockchain-Netzwerk 450 einer SSI-Infrastruktur, welches eine Blockchain 400 bereitstellt. Bei der Blockchain 400 handelt es sich beispielsweise um eine öffentliche genehmigungspflichtige Blockchain, welche von dem Blockchain-Netzwerk 450 als verteiltes Register verwaltet wird. Das Blockchain-Netzwerk 450 umfasst eine Mehrzahl von Blockchain-Servern 412, 432, auf welchen beispielsweise jeweils eine Kopie der Blockchain 400 in einem entsprechenden Speicher 418, 438 gespeichert ist. Die Blockchain-Server 412, 432 umfassen jeweils einen Prozessor 414, 434 zum Ausführen von Programminstruktionen 416, 436 von Programmen 419, 439 zum Verwalten der Blockchain 400. Schließlich umfassen die Blockchain-Server 412, 432 jeweils eine Kommunikationsschnittstelle 420, 440 zum Kommunizieren über das Netzwerk 103, etwa mit dem Ausstellercomputersystem 100 und/oder dem anfragenden Computersystem 150 der Entität.

Bei einer Entität, für welche ein digitales Credential mit entitätsbezogenen Attributen ausgestellt wird, kann es sich beispielsweise auch um eine das von dem Registercomputersystem 250 bereitgestellte Register verwaltende Entität, etwa ein zuständiges Gericht bei einem Handelsregister oder eine den Ausstellerdienst des Austellercomputersystems 100 bereitstellende Entität, etwa ein entsprechendes Unternehmen handeln. Grundsätzlich können für alle an dem System beteiligten Entitäten entsprechende digitale Credential mit entitätsbezogenen Attributen ausgestellt werden. Möchte eine zusätzliche Entität erstmals an dem implementierten System teilnehmen bzw. dem implementierten System beitreten, muss die entsprechende Entität für sich eine Ausstellung eines entsprechendes digitales Credential mit entitätsbezogenen Attributen durch das Ausstellercomputersystem 100 anfragen, wie es vorangehend für eine exemplarische Entität unter Verwendung des Computersystems 150 beschrieben wurde.

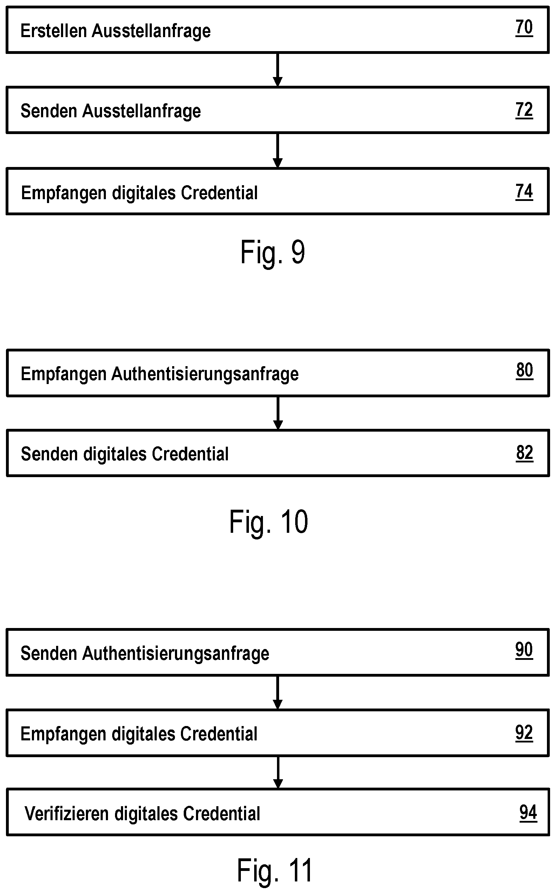

Figur 9 zeigt ein exemplarisches Verfahren zum Anfragen eines digitalen Credentials für eine Entität durch ein Computersystem der Entität. In Block 70 erstellt das Computersystem eine entsprechend Ausstellanfrage zum Ausstellen des digitalen Credentials. Die Ausstellanfrage umfasst eine der anfragenden Entität zugeordnete Register-ID, welche einen Registereintrag der Entität in einem Register identifiziert, eine der anfragenden Entität zugeordnete Domain, eine E-Mail-Adresse eines offiziellen Vertreters der Entität und einen Decentralized Identifier, d.h. DID, der Entität. In Block 72 sendet das Computersystem die Ausstellanfrage über ein Netzwerk an ein Ausstellercomputersystem. In Block 74 empfängt das Computersystem, in Antwort auf die gesendete Ausstellanfrage, das digitale Credential über das Netzwerk von dem Ausstellercomputersystem. Beispielsweise umfasst das Verfahren ferner ein optionales Challenge-Response-Verfahrens zum Nachweis einer Kontrolle des Computersystems über eine Domain der Entität als Voraussetzung für Block 74. Im Zuge des Challenge-Response-Verfahrens empfängt das Computersystem einen Zufallswert als Challenge von dem Ausstellercomputersystem, welchen das Computersystem als Response auf den Empfang der Challenge in der Domain der Entität veröffentlicht.

Figur 10 zeigt ein exemplarisches Verfahren zum Authentisieren unter Verwendung eines digitalen Credentials durch ein Computersystem einer Entität. In Block 80 empfängt das Computersystem eine Authentisierungsanfrage von einem die Entität authentifizierenden Computersystem. In Block 82 sendet das Computersystem der Entität in Antwort auf die Authentisierungsanfrage das digitale Credential der Entität an das die Entität authentifizierende Computersystem.

Figur 11 zeigt ein exemplarisches Verfahren zum Authentifizieren unter Verwendung eines digitalen Credentials. In Block 90 sendet ein authentifizierendes Computersystem an ein eine Entität authentisierendes Computersystem eine Authentisierungsanfrage. In Block 92 empfängt das authentifizierende Computersystem in Antwort auf die Authentisierungsanfrage das entsprechende digitale Credential der zu authentifizierenden Entität. In Block 94 authentifiziert das authentifizierende Computersystem die zu authentifizierenden Entität unter Verwendung des digitalen Credentials.

### Bezugszeichenliste

- 100: Ausstellercomputersystem
- 101: System
- 103: Netzwerk
- 102: Ausstellerprogramm
- 104: Dienstprogramm
- 110: digitales Credential
- 112: Speicher
- 114: Programme
- 118: öffentlicher kryptographischer Schlüssel
- 120: geschützter Speicherbereich
- 124: privater kryptographischer Schlüssel
- 124: Prozessor
- 126: Programminstruktionen
- 128: Kommunikationsschnittstelle
- 150: anfragendes Computersystem
- 156: Browser
- 152: Speicher
- 154: Programme
- 156: Prozessor
- 158: Programminstruktionen
- 162: Kommunikationsschnittstelle
- 164: Nutzerschnittstelle
- 200: Vertretercomputersystem
- 201: offizieller Vertreter
- 202: ID-Wallet
- 204: geschützter Speicherbereich
- 206: E-Mail-Client
- 208: Clientprogramm
- 212: Speicher
- 214: Programme
- 216: Prozessor
- 218: Programminstruktionen
- 222: Kommunikationsschnittstelle
- 224: Nutzerschnittstelle
- 250: Registercomputersystem
- 252: Speicher
- 254: Registereinträge
- 256: Prozessor
- 258: Programminstruktionen
- 262: Kommunikationsschnittstelle
- 300: Domain-Server
- 302: Speicher
- 304: Domain
- 306: Prozessor
- 308: Programminstruktionen
- 312: Kommunikationsschnittstelle
- 400: Blockchain
- 402: Authentifizierungsdaten
- 404: öffentliche kryptographische Schlüssel
- 406: Datenschemata
- 408: Revozierungsdaten
- 412: Blockchain-Server
- 414: Speicher
- 416: Prozessor
- 418: Programminstruktionen
- 419: Programme
- 420: Kommunikationsschnittstelle
- 432: Blockchain-Server
- 434: Speicher
- 436: Prozessor
- 438: Programminstruktionen
- 439: Programme
- 440: Kommunikationsschnittstelle
- 450: Blockchain-Netzwerk
- 500: ID-Provider-Computersystem
- 502: ID-Token
- 600: Ausstellanfrage
- 602: E-Mail
- 602: maschinenlesbarer optischer Code
- 700: Prüfcomputersystem

## Patentansprüche

1. Verfahren zum Ausstellen eines digitalen Credentials (110) für eine Entität durch ein Ausstellercomputersystem (100),
wobei das Verfahren umfasst:
• Empfangen einer Ausstellanfrage (600) zum Ausstellen des digitalen Credentials (110) über ein Netzwerk (103) von einem anfragenden Computersystem (150), wobei die Ausstellanfrage (600) eine der anfragenden Entität zugeordnete Domain (304), eine E-Mail-Adresse eines offiziellen Vertreters der Entität und einen Decentralized Identifier umfasst,
• Senden einer Registerabfrage nach einem Registereintrag (254) als Existenznachweis der Entität über das Netzwerk (103) an ein Registercomputersystem (250),
• In Antwort auf das Senden der Registerabfrage, Empfangen eines digitalen Registerauszugs der Entität als Existenznachweis über das Netzwerk (103) von dem Registercomputersystem (250),
• Prüfen einer Verknüpfung zwischen der Domain (304) und dem Decentralized Identifier,
• Senden einer E-Mail (602) mit einer Einladung zum Aufbau eines verschlüsselten Kommunikationskanals an die E-Mail-Adresse,
• in Antwort auf das Senden der E-Mail (602), Aufbau eines verschlüsselten Kommunikationskanals zwischen dem Ausstellercomputersystem (100) und einer ID-Wallet (202) des offiziellen Vertreters der Entität über das Netzwerk (103),
• Senden einer Anfrage nach einem digitalen ID-Credential des offiziellen Vertreters der Entität mit personenbezogenen Attributen des Vertreters über den verschlüsselten Kommunikationskanal,
• In Antwort auf das Senden der Anfrage, Empfangen des digitalen ID-Credential über den verschlüsselten Kommunikationskanal,
• Verifizieren der Authentizität des digitalen ID-Credentials,
• Prüfen der Vertretungsberechtigung des offiziellen Vertreters der Entität unter Verwendung der personenbezogenen Attribute des digitalen ID-Credential und des digitalen Registerauszugs der Entität,
• auf eine erfolgreiche Prüfung der Vertretungsberechtigung hin, Ausstellen des digitalen Credentials (110) mit entitätsbezogenen Attributen unter Verwendung des digitalen Registerauszugs,
• Senden des digitalen Credentials (110) in Antwort auf die empfangen Ausstellanfrage (600) über das Netzwerk (103) an das anfragende Computersystem (150).

2. Verfahren nach Anspruch 1, wobei die Ausstellanfrage (600) eine Register-ID der Entität umfasst, wobei die Registerabfrage die Register-ID umfasst.

3. Verfahren nach einem der vorangehenden Ansprüche, wobei die Registerabfrage eine Suchanfrage nach Einträgen der Entität umfasst.

4. Verfahren nach einem der vorangehenden Ansprüche, wobei eine Mehrzahl von Registerabfragen über das Netzwerk (103) an eine Mehrzahl von Registercomputersystemen (250) gesendet wird.

5. Verfahren nach Anspruch 4, wobei in Antwort auf das Senden der Registerabfrage, eine Mehrzahl von digitalen Registerauszügen der Entität über das Netzwerk (103) von der Mehrzahl von Registercomputersystemen (250) empfangen wird, wobei das digitale Credential (110) mit den entitätsbezogenen Attributen unter Verwendung der Mehrzahl von digitalen Registerauszügen ausgestellt wird.

6. Verfahren nach einem der vorangehenden Ansprüche, wobei das Prüfen der Verknüpfung zwischen der Domain (304) und dem Decentralized Identifier ein Prüfen umfasst, ob unter der Domain (304) eine Referenz auf den Decentralized Identifier hinterlegt ist.

7. Verfahren nach einem der vorangehenden Ansprüche, wobei das Prüfen der Verknüpfung zwischen der Domain (304) und dem Decentralized Identifier ein Aufrufen eines Decentralized Identifier Dokuments des Decentralized Identifier und Prüfen umfasst, ob das Decentralized Identifier Dokument eine Referenz auf die Domain (304) umfasst.

8. Verfahren nach einem der vorangehenden Ansprüche, wobei das Verfahren ferner ein Prüfen einer Kontrolle des anfragenden Computersystems (150) über die Domain (304) umfasst.

9. Verfahren nach Anspruch 8, wobei das Prüfen der Kontrolle unter Verwendung eines Challenge-Response-Verfahrens erfolgt, wobei das Ausstellercomputersystem (100) eine Challenge zur Veröffentlichung in der Domain (304) über das Netzwerk (103) an das anfragende Computersystem (150) sendet, wobei das Ausstellercomputersystem (100) die Response in Form der Veröffentlichung in der Domain (304) prüft.

10. Verfahren nach einem der vorangehenden Ansprüche, wobei die E-Mail (602) die Einladung zum Aufbau des verschlüsselten Kommunikationskanals in Form eines maschinenlesbaren optischen Codes (602) umfasst.

11. Verfahren nach einem der vorangehenden Ansprüche, wobei es sich bei dem verschlüsselten Kommunikationskanal um einen DIDComm-Kanal handelt und/oder
wobei es sich bei dem Ausstellercomputersystems (100) um ein Computersystem eines Ausstellerdienstes einer SSI-Infrastruktur handelt.

12. Verfahren nach einem der vorangehenden Ansprüche, wobei das Verfahren ferner ein Verwenden des digitalen Credentials (110) durch das anfragende Computersystem (150) umfasst, wobei das Verwenden ein Senden des digitalen Credential (110) an ein authentifizierendes Computersystem umfasst im Zuge eines Authentisierens der Entität gegenüber dem authentifizierenden Computersystem.

13. Ausstellercomputersystem (100) zum Ausstellen eines digitalen Credentials (110) für eine Entität, wobei das Ausstellercomputersystem (100) einen ersten Prozessor (124), einen ersten Speicher (112) mit ersten Programminstruktionen (114) und eine erste Kommunikationsschnittstelle (128) zur Kommunikation über ein Netzwerk (103) umfasst,
wobei ein Ausführen der ersten Programminstruktionen (114) durch den ersten Prozessor (124) des Ausstellercomputersystem (100) den ersten Prozessor (124) dazu veranlasst, das Ausstellercomputersystem (100) zu steuern zum:
• Empfangen einer Ausstellanfrage (600) zum Ausstellen des digitalen Credentials (110) über ein Netzwerk (103) von einem anfragenden Computersystem (150), wobei die Ausstellanfrage (600) eine der anfragenden Entität zugeordnete Domain (304), eine E-Mail-Adresse eines offiziellen Vertreters der Entität und einen Decentralized Identifier umfasst,
• Senden einer Registerabfrage nach einem Registereintrag (254) als Existenznachweis der Entität über das Netzwerk (103) an ein Registercomputersystem (250),
• Empfangen eines digitalen Registerauszugs der Entität als Existenznachweis über das Netzwerk (103) von dem Registercomputersystem (250),
• Prüfen einer Verknüpfung zwischen der Domain (304) und dem Decentralized Identifier,
• Senden einer E-Mail (602) mit einer Anfrage zum Aufbau eines verschlüsselten Kommunikationskanals an die E-Mail-Adresse,
• in Antwort auf das Senden der E-Mail (602), Aufbau eines verschlüsselten Kommunikationskanals zwischen dem Ausstellercomputersystem (100) und einer ID-Wallet (202) des offiziellen Vertreters der Entität über das Netzwerk (103),
• Senden einer Anfrage nach einem digitalen ID-Credential des offiziellen Vertreters der Entität mit personenbezogenen Attributen des Vertreters über den verschlüsselten Kommunikationskanal,
• In Antwort auf das Senden der Anfrage, Empfangen des digitalen ID-Credential über den verschlüsselten Kommunikationskanal,
• Verifizieren der Authentizität des digitalen ID-Credentials,
• Prüfen der Vertretungsberechtigung des offiziellen Vertreters der Entität unter Verwendung der personenbezogenen Attribute des digitalen ID-Credential und des digitalen Registerauszugs der Entität,
• auf eine erfolgreiche Prüfung der Vertretungsberechtigung hin, Ausstellen des digitalen Credentials (110) mit entitätsbezogenen Attributen unter Verwendung des digitalen Registerauszugs,
• Senden des digitalen Credentials (110) in Antwort auf die empfangen Ausstellanfrage (600) über das Netzwerk (103) an das anfragende Computersystem (150).

14. System (101) umfassend ein Ausstellercomputersystem (100) nach Anspruch 13 und ein anfragendes Computersystem (150), wobei das anfragende Computersystem (150) einen zweiten Prozessor (156), einen zweiten Speicher (152) mit zweiten Programminstruktionen (154) und eine zweite Kommunikationsschnittstelle (162) zur Kommunikation über das Netzwerk (103) umfasst,
wobei ein Ausführen der zweiten Programminstruktionen (154) durch den zweiten Prozessor (156) des anfragenden Computersystems (150) den zweiten Prozessor (156) dazu veranlasst, das anfragende Computersystem (150) zu steuern zum:
• Erstellen der Ausstellanfrage (600) zum Ausstellen des digitalen Credentials (110),
• Senden der Ausstellanfrage (600) über das Netzwerk (103) an das Ausstellercomputersystem (100),
• in Antwort auf die gesendete Ausstellanfrage (600), Empfangen des digitalen Credentials (110) über das Netzwerk (103) von dem Ausstellercomputersystem (100).

15. System (101) nach Anspruch 14, wobei das Ausführen der zweiten Programminstruktionen (154) durch den zweiten Prozessor (156) des anfragenden Computersystems (150) den zweiten Prozessor (156) ferner das anfragende Computersystem (150) zu einem Verwenden des empfangenen digitalen Credentials (110) veranlasst, wobei das Verwenden ein Senden des digitalen Credentials (110) an ein authentifizierendes Computersystem umfasst im Zuge eines Authentisierens der Entität gegenüber dem authentifizierenden Computersystem.

## Claims

1. A method for issuing a digital credential (110) for an entity by an issuer computer system (100),
wherein the method comprises:
• receiving an issuing request (600) for issuing the digital credential (110) via a network (103) from a requesting computer system (150), wherein the issuing request (600) comprises a domain (304) associated with the requesting entity, an email address of an official representative of the entity and a decentralized identifier,
• sending a registry query for a registry entry (254) as proof of the existence of the entity via the network (103) to a registry computer system (250),
• in response to sending the registry query, receiving a digital registry extract of the entity as proof of existence via the network (103) from the registry computer system (250),
• checking a link between the domain (304) and the decentralized identifier,
• sending an email (602) with an invitation to establish an encrypted communication channel to the email address,
• in response to sending the email (602), establishing an encrypted communication channel between the issuer computer system (100) and an ID wallet (202) of the official representative of the entity via the network (103),
• sending a request for a digital ID credential of the official representative of the entity with personal attributes of the representative via the encrypted communication channel,
• in response to sending the request, receiving the digital ID credential via the encrypted communication channel,
• verifying the authenticity of the digital ID credential,
• checking the representation authorization of the official representative of the entity using the personal attributes of the digital ID credential and the digital registry extract of the entity,
• on successful verification of the representation authorization, issuing the digital credential (110) with entity-related attributes using the digital registry extract,
• sending the digital credential (110) in response to the received issuing request (600) via the network (103) to the requesting computer system (150).

2. The method according to claim 1, wherein the issuing request (600) comprises a registry ID of the entity, wherein the registry query comprises the registry ID.

3. The method according to any one of the preceding claims, wherein the registry query comprises a search query for entries of the entity.

4. The method according to any one of the preceding claims, wherein a plurality of registry queries are sent via the network (103) to a plurality of registry computer systems (250).

5. The method according to claim 4, wherein in response to sending the registry query, a plurality of digital registry extracts of the entity are received via the network (103) from the plurality of registry computer systems (250), wherein the digital credential (110) with the entity-related attributes is issued using the plurality of digital registry extracts.

6. The method according to any one of the preceding claims, wherein checking the link between the domain (304) and the decentralized identifier comprises checking whether a reference to the decentralized identifier is stored under the domain (304).

7. The method according to any one of the preceding claims, wherein checking the link between the domain (304) and the decentralized identifier comprises retrieving a decentralized identifier document of the decentralized identifier and checking whether the decentralized identifier document comprises a reference to the domain (304).

8. The method according to any one of the preceding claims, wherein the method further comprises checking a control of the requesting computer system (150) via the domain (304).

9. The method according to claim 8, wherein the checking of the control is performed using a challenge-response method, wherein the issuer computer system (100) sends a challenge to publish in the domain (304) via the network (103) to the requesting computer system (150), wherein the issuer computer system (100) checks the response in the form of the publication in the domain (304).

10. The method according to any one of the preceding claims, wherein the email (602) comprises the invitation to establish the encrypted communication channel in the form of a machine-readable optical code (602).

11. The method according to any one of the preceding claims, wherein the encrypted communication channel is a DIDComm channel and/or
wherein the issuer computer system (100) is a computer system of an issuer service of an SSI infrastructure.

12. The method according to any one of the preceding claims, wherein the method further comprises using the digital credential (110) by the requesting computer system (150), wherein the use comprises sending the digital credential (110) to an authenticating computer system in the course of authenticating the entity to the authenticating computer system.

13. An issuer computer system (100) for issuing a digital credential (110) for an entity, wherein the issuer computer system (100) comprises a first processor (124), a first memory (112) having first program instructions (114) and a first communication interface (128) for communication via a network (103),
wherein execution of the first program instructions (114) by the first processor (124) of the issuer computer system (100) causes the first processor (124) to control the issuer computer system (100) for:
• receiving an issuing request (600) for issuing the digital credential (110) via a network (103) from a requesting computer system (150), wherein the issuing request (600) comprises a domain (304) associated with the requesting entity, an email address of an official representative of the entity and a decentralized identifier,
• sending a registry query for a registry entry (254) as proof of existence of the entity via the network (103) to a registry computer system (250),
• receiving a digital registry extract of the entity as proof of existence via the network (103) from the registry computer system (250),
• checking a link between the domain (304) and the decentralized identifier,
• sending an email (602) with a request to establish an encrypted communication channel to the email address,
• in response to sending the email (602), establishing an encrypted communication channel between the issuer computer system (100) and an ID wallet (202) of the official representative of the entity via the network (103),
• sending a request for a digital ID credential of the official representative of the entity with personal attributes of the representative via the encrypted communication channel,
• in response to sending the request, receiving the digital ID credential via the encrypted communication channel,
• verifying the authenticity of the digital ID credential,
• checking the representation authorization of the official representative of the entity using the personal attributes of the digital ID credential and the digital registry extract of the entity,
• on successful verification of the representation authorization, issuing the digital credential (110) with entity-related attributes using the digital registry extract,
• sending the digital credential (110) in response to the received issuing request (600) via the network (103) to the requesting computer system (150).

14. A system (101) comprising an issuer computer system (100) according to claim 13 and a requesting computer system (150), wherein the requesting computer system (150) comprises a second processor (156), a second memory (152) with second program instructions (154) and a second communication interface (162) for communication via the network (103),
wherein executing the second program instructions (154) by the second processor (156) of the requesting computer system (150) causes the second processor (156) to control the requesting computer system (150) for:
• creating the issuing request (600) to issue the digital credential (110),
• sending the issuing request (600) via the network (103) to the issuer computer system (100),
• in response to the sent issuing request (600), receiving the digital credential (110) via the network (103) from the issuer computer system (100).

15. The system (101) according to claim 14, wherein the execution of the second program instructions (154) by the second processor (156) of the requesting computer system (150) further causes the second processor (156) to cause the requesting computer system (150) to use the received digital credential (110), wherein the use comprises sending the digital credential (110) to an authenticating computer system in the course of authenticating the entity to the authenticating computer system.

## Revendications

1. Procédé de délivrance d'un certificat numérique (110) pour une entité par un système informatique émetteur (100),
le procédé comprenant :
• la réception d'une demande de délivrance (600) pour la délivrance du certificat numérique (110) par le biais d'un réseau (103) en provenance d'un système informatique demandeur (150), où la demande de délivrance (600) comprend un domaine (304) associé à l'entité demanderesse, une adresse email d'un représentant officiel de l'entité et un identifiant décentralisé,
• l'envoi d'une interrogation de registre pour une entrée de registre (254) servant de preuve d'existence de l'entité par le biais du réseau (103) à un système informatique d'enregistrement (250),
• en réponse à l'envoi de l'interrogation de registre, la réception d'un extrait de registre numérique de l'entité servant de preuve d'existence par le biais du réseau (103) à partir du système informatique d'enregistrement (250),
• la vérification d'un lien entre le domaine (304) et l'identifiant décentralisé,
• l'envoi d'un email (602) avec une invitation pour l'établissement d'un canal de communication chiffré à l'adresse email,
• en réponse à l'envoi de l'email (602), l'établissement d'un canal de communication chiffré entre le système informatique émetteur (100) et un portefeuille d'ID (202) d'un représentant officiel de l'entité par le biais du réseau (103),
• l'envoi d'une demande pour un certificat d'ID numérique du représentant officiel de l'entité avec des attributs relatifs à la personne du représentant par le biais du canal de communication chiffré,
• en réponse à l'envoi de la demande, la réception du certificat d'ID numérique par le biais du canal de communication chiffré,
• le contrôle de l'authenticité du certificat d'ID numérique,
• la vérification de l'autorisation de représentation du représentant officiel de l'entité moyennant l'emploi des attributs relatifs à la personne du certificat d'ID numérique et de l'extrait de registre numérique de l'entité,
• suite à une vérification réussie de l'autorisation de représentation, la délivrance du certificat numérique (110) avec des attributs relatifs à l'entité moyennant l'emploi de l'extrait de registre numérique,
• l'envoi du certificat numérique (110) en réponse à la demande de délivrance (600) reçue par le biais du réseau (103) au système informatique (150) demandeur.

2. Procédé selon la revendication 1, dans lequel la demande de délivrance (600) comprend un ID de registre de l'entité, où l'interrogation de registre comprend l'ID de registre.

3. Procédé selon l'une des revendications précédentes, dans lequel l'interrogation de registre comprend une demande de recherche pour l'entrée de l'entité.

4. Procédé selon l'une des revendications précédentes, dans lequel une multiplicité de demandes de registre est envoyée par le biais du réseau (103) à une multiplicité de systèmes informatiques d'enregistrement (250).

5. Procédé selon la revendication 4, dans lequel, en réponse à l'envoi de l'interrogation de registre, une multiplicité d'extraits de registre numériques de l'entité est reçue par le biais du réseau (103) par la multiplicité de systèmes informatiques d'enregistrement (250), où le certificat numérique (110) est délivré avec les attributs relatifs à l'entité moyennant l'emploi de la multiplicité d'extraits de registre numériques.

6. Procédé selon l'une des revendications précédentes, dans lequel la vérification du lien entre le domaine (304) et l'identifiant décentralisé comprend une vérification que sous le domaine (304) est déposée une référence concernant l'identifiant décentralisé.

7. Procédé selon l'une des revendications précédentes, dans lequel la vérification du lien entre le domaine (304) et l'identifiant décentralisé comprend une référence à un document d'identifiant décentralisé de l'identifiant décentralisé et une vérification que le document d'identifiant décentralisé comprend une référence au domaine (304).

8. Procédé selon l'une des revendications précédentes, le procédé comprenant en outre une vérification d'une commande du système informatique demandeur (150) par le biais du domaine (304).

9. Procédé selon la revendication 8, dans lequel la vérification de la commande a lieu moyennant l'emploi d'un procédé de défi-réponse, où le système informatique émetteur (100) envoie un défi pour la publication dans le domaine (304) par le biais du réseau (103) au système informatique demandeur (150), où le système informatique émetteur (100) vérifie la réponse sous la forme de la publication dans le domaine (304).

10. Procédé selon l'une des revendications précédentes, dans lequel l'email (602) comprend l'invitation pour l'établissement du canal de communication chiffré sous la forme d'un code lisible par machine (602).

11. Procédé selon l'une des revendications précédentes, dans lequel, dans le cas du canal de communication chiffré, il s'agit d'un canal DIDComm et/ou
dans lequel, dans le cas du système informatique émetteur (100), il s'agit d'un système informatique d'un service de délivrance d'une structure SSI.

12. Procédé selon l'une des revendications précédentes, le procédé comprenant en outre l'utilisation du certificat numérique (110) par le système informatique demandeur (150), où l'utilisation comprend un envoi du certificat numérique (110) à un système informatique d'authentification dans le cadre d'une authentification de l'entité vis-à-vis du système informatique d'authentification.

13. Système informatique émetteur (100) permettant la délivrance d'un certificat numérique (110) pour une entité, le système informatique émetteur (100) comprenant un premier processeur (124), une première mémoire (112) avec des premières instructions de programme (114) et une première interface de communication (128) pour la communication par le biais d'un réseau (103),
dans lequel une exécution des premières instructions de programme (114) par le premier processeur (124) du système informatique émetteur (100) fait en sorte que le premier processeur (124) commande au système informatique émetteur (100) :
• la réception d'une demande de délivrance (600) pour la délivrance du certificat numérique (110) par le biais d'un réseau (103) en provenance d'un système informatique demandeur (150), où la demande de délivrance (600) comprend un domaine (304) associé à l'entité demanderesse, une adresse email d'un représentant officiel de l'entité et un identifiant décentralisé,
• l'envoi d'une interrogation de registre pour une entrée de registre (254) servant de preuve d'existence de l'entité par le biais du réseau (103) à un système informatique d'enregistrement (250),
• la réception d'un extrait de registre numérique de l'entité servant de preuve d'existence par le biais du réseau (103) à partir du système informatique d'enregistrement (250),
• la vérification d'un lien entre le domaine (304) et l'identifiant décentralisé,
• l'envoi d'un email (602) avec une invitation pour l'établissement d'un canal de communication chiffré à l'adresse email,
• en réponse à l'envoi de l'email (602), l'établissement d'un canal de communication chiffré entre le système informatique émetteur (100) et un portefeuille d'ID (202) du représentant officiel de l'entité par le biais du réseau (103),
• l'envoi d'une demande pour un certificat d'ID numérique du représentant officiel de l'entité avec des attributs relatifs à la personne du représentant par le biais du canal de communication chiffré,
• en réponse à l'envoi de la demande, la réception du certificat d'ID numérique par le biais du canal de communication chiffré,
• le contrôle de l'authenticité du certificat d'ID numérique,
• la vérification de l'autorisation de représentation du représentant officiel de l'entité moyennant l'emploi des attributs relatifs à la personne du certificat d'ID numérique et de l'extrait de registre numérique de l'entité,
• suite à une vérification réussie de l'autorisation de représentation, la délivrance du certificat numérique (110) avec des attributs relatifs à l'entité moyennant l'emploi de l'extrait de registre numérique,
• l'envoi du certificat numérique (110) en réponse à la demande de délivrance (600) reçue par le biais du réseau (103) au système informatique (150) demandeur.

14. Système (101) comprenant un système informatique émetteur (100) selon la revendication 13 et un système informatique demandeur (150), où le système informatique demandeur (150) comprend un deuxième processeur (156), une deuxième mémoire (152) avec des deuxièmes instructions de programme (154) et une deuxième interface de communication (162) pour la communication par le biais du réseau (103),
dans lequel une exécution des deuxièmes instructions de programme (154) par le deuxième processeur (156) du système informatique demandeur (150) fait en sorte que le deuxième processeur (156) commande au système informatique demandeur (150) :
• l'établissement d'une demande de délivrance (600) pour la délivrance du certificat numérique (110),
• l'envoi de la demande de délivrance (600) par le biais du réseau (103) au système informatique émetteur (100),
• en réponse à la demande de délivrance (600) envoyée, la réception du certificat numérique (110) par le biais du réseau (103) par le système informatique émetteur (100).

15. Système (101) selon la revendication 14,dans lequel l'exécution des deuxièmes instructions de programme (154) par le deuxième processeur (156) du système informatique demandeur (150) fait en outre en sorte que le deuxième processeur (156) incite le système informatique demandeur (150) à une utilisation du certificat numérique (110) reçu, où l'utilisation comprend un envoi du certificat numérique (110) à un système informatique d'authentification dans le cadre d'une authentification de l'entité vis-à-vis du système informatique d'authentification.
